# EUROPÄISCHE PATENTSCHRIFT

(11) **EP 3 370 510 B1**
(45) Veröffentlichungstag und Bekanntmachung des Hinweises auf die Patenterteilung: **15.01.2020**
(21) Anmeldenummer: 16801128.6
(22) Anmeldetag: 25.10.2016
(51) Int. Cl.: A01J 11/02, A01J 11/04, B01D 19/02

(54) **VERFAHREN UND VORRICHTUNG ZUR STEUERUNG DER SCHAUMBILDUNG IN EINER ENTGASUNGSVORRICHTUNG FÜR FLÜSSIGKEITEN UND REGISTERSYSTEM FÜR EINE SOLCHE VORRICHTUNG**
METHOD AND DEVICE FOR CONTROLLING FOAMING IN A DEGASSING DEVICE FOR LIQUIDS AND HEAT-EXCHANGER SYSTEM FOR SUCH A DEVICE
PROCÉDÉ ET DISPOSITIF DE RÉGULATION DE LA FORMATION DE MOUSSE DANS UN DISPOSITIF DE DÉGAZAGE POUR LIQUIDES ET SYSTÈME D'ÉCHANGEURS THERMIQUES POUR UN TEL DISPOSITIF

(30) Priorität: 03.11.2015 DE 102015014107; 20.11.2015 DE 102015015056
(43) Veröffentlichungstag der Anmeldung: 12.09.2018
(73) Patentinhaber: GEA TDS GmbH, 31157 Sarstedt (DE)
(72) Erfinder: ASSING, Hubert, 48683 Ahaus (DE); BUSS, Helmut, 46359 Heiden (DE); ROLLE, Ulrich, 48351 Everswinkel (DE); SCHMIED, Andreas, 48249 Dülmen (DE); SCHWENZOW, Uwe, 48683 Ahaus (DE); TACKE, Ludger, 46342 Velen (DE); ZIMMERMANN, Dietrich, 96103 Hallstadt (DE)
(74) Vertreter: Hauck Patentanwaltspartnerschaft mbB
(86) Internationale Anmeldenummer: PCT/EP2016/001763
(87) Internationale Veröffentlichungsnummer: WO 2017/076488

(56) Entgegenhaltungen:
- EP-B1- 1 866 046
- WO-A1-2005/036954
- DE-A1- 2 163 666
- GB-A- 726 804
- US-A- 1 250 094
- US-A- 2 604 154
- US-A- 4 139 350

## Beschreibung

### TECHNISCHES GEBIET

Die Erfindung betrifft ein Verfahren und eine Vorrichtung zur Steuerung der Schaumbildung in einer Entgasungsvorrichtung für Flüssigkeiten sowie ein Registersystem für eine solche Vorrichtung. Bei den zu entgasenden Flüssigkeiten, nachfolgend kurz als Flüssigkeiten bezeichnet, handelt es sich vorzugsweise um flüssige Nahrungsmittel wie beispielsweise Milch, teilentrahmte Milch oder Fruchtsäfte.

### STAND DER TECHNIK

Bei den Flüssigkeiten der in Rede stehenden Art sind Gasbeimengungen, insbesondere Luftbeimengungen mit ihrem Anteil an Luftsauerstoff, in vielfacher Hinsicht schädlich. Aus diesem Grunde sind in Prozessanlagen, die die vorgenannten gasbeladenen flüssigen Nahrungsmittel behandeln und verarbeiten, Entgasungsvorrichtungen angeordnet. Bei diesen Prozessanlagen kann es sich beispielsweise um Pasteurisierungs-, UHT-Anlagen oder um Eindampfer handeln.

Nachstehend werden zwei Sachverhalte kurz dargestellt, die mit Blick auf diese Prozessanlagen die Notwendigkeit, insbesondere Milch zu entgasen, näher erläutern.
1. Die Beladungsfähigkeit beispielsweise der Milch mit Luft bzw. Luftsauerstoff ist bekanntlich unter anderem auch von deren Fettgehalt abhängig, wobei in UHT-Anlagen, in denen die Milch zur Verlängerung ihrer Haltbarkeit wärmebehandelt wird, beispielsweise Magermilch oder standardisierte Milch mit einem Fettgehalt zwischen 1,5 und 3,5 % eingesetzt wird. Es hat sich für die Standzeit der UHT-Anlagen mit indirekter Erhitzung als vorteilhaft erwiesen, wenn der Luftgehalt unterhalb von 8 mg Luft/dm³ (8 ppm) Milch liegt. Oberhalb eines diesbezüglichen Grenzwertes besteht die erhöhte Gefahr des Anbrennens, insbesondere in den Wärmeaustauschern der Erhitzerzone und des Heißhalters, wodurch die Standzeit dieser Wärmeaustauscher signifikant verkürzt wird.
2. In Wärmeaustauschern molkereitechnischer Prozessanlagen können sich, unabhängig von der Ausführung als Platten- oder Rohr-Wärmeaustauscher, der Rohmilch oder deren Fraktionen (Magermilch, Rahm) entstammende thermophile Mikroorganismen bzw. Bakterien, die keiner Hocherhitzung unterzogen und damit nicht inaktiviert wurden, oder die Stoffwechselprodukte dieser Bakterien ansetzen und einen sogenannten Biofilm bilden. Dieser Biofilm entsteht vorzugsweise in einem Wärmeaustauscher, in dem die Milch im Temperaturbereich von ca. 50 °C bis 70 °C thermisch behandelt wird. Bei Temperaturen über 50 °C können zwar keine pathogenen Bakterien mehr wachsen, dafür aber andere Keime, die vorstehend erwähnten thermophilen Mikroorganismen bzw. Bakterien (kurz: thermophile Keime). Thermophile Keime nutzen einen Temperaturbereich von ca. 40 °C bis 80 °C, wobei der Temperaturbereich für das optimale Wachstum der thermophilen Keime im Bereich von ca. 63 °C bis 68 ° liegt. Neben diesem Temperaturoptimum müssen für das Wachstum ausreichend Nährstoffe und Sauerstoff gegeben sein. Da der vorstehend erwähnte Biofilm die Standzeit der in Frage kommenden Wärmeaustauscher signifikant verkürzt, gilt es, das Wachstum der thermophilen Keime zu verhindern bzw. mindestens zu hemmen. Dies gelingt in erster Linie dadurch, dass der Gehalt der Luft bzw. des Luftsauerstoffs, vorzugsweise in Entgasungsvorrichtungen der in Rede stehenden Art, reduziert wird. Die zu entgasende Flüssigkeit wird dabei in einem Temperaturbereich von 40 °C bis 80 °C, vorzugsweise zwischen 50 °C bis 70 °C, behandelt.

In den beiden vorgenannten Anwendungen werden Entgasungsvorrichtungen eingesetzt, um insbesondere den Luftgehalt zu reduzieren. Eine diesbezügliche Entgasungsvorrichtung ist aus der EP 1 866 046 B1 bekannt. Hier wird die zu entgasende teilentrahmte Milch einem Entgasungsbehälter von unten, zentral zugeführt und oberhalb einer freien Oberfläche der in dem Entgasungsbehälter befindlichen Milchvorlage über einen nach außen abfallenden Verteilerschirm in Form eines Flüssigkeitsfilms eingeleitet Der Flüssigkeitsfilm wird an einer Oberfläche des Verteilerschirmes ausgebildet und tritt in die freie Oberfläche in einem mehr oder weniger großen radialen Abstand von der Mantelfläche des Entgasungsbehälter ein.

Der Verteilerschirm kann dabei sehr flach und damit nur gering in axialer Richtung abfallend ausgeführt sein. Es sind aber auch Ausführungsformen bekannt, bei denen der Verteilerschirm als Kegel oder kegelförmig ausgebildet ist, dessen Spitzenwinkel bis auf 45 Grad reduziert sein kann. Wenn der flach abfallende oder der kegelige bzw. kegelförmige Verteilerschirm in einem größeren Abstand von der Mantelfläche des Entgasungsbehälters endet, dann bildet sich im Bereich dieses Abstandes die in der Regel niveaugesteuerte freie Oberfläche bzw. ein freies Niveau der Flüssigkeitsvorlage im Entgasungsbehälter aus. Dabei kann der äußere Rand des Verteilerschirms, wie dies im Regelfall gegeben ist, in die freie Oberfläche eintauchen oder auch um einen geringen Abstand oberhalb der freien Oberfläche enden. Die Abführung der entgasten Milch erfolgt über den untersten, zentralen Bereich des Entgasungsbehälters.

Im Regelfall wird die Entgasung in den bekannten Entgasungsvorrichtungen dadurch forciert, dass die Flüssigkeit einem Unterdruck ausgesetzt ist, der durch eine an den Kopfraum des Entgasungsbehälters angeschlossene Unterdruckquelle, beispielsweise eine Flüssigkeitsringpumpe, erzeugt wird.

Bei der Entgasung in den bekannten Entgasungsvorrichtungen generieren der ausgebrachte Flüssigkeitsfilm, der an der Oberfläche des Verteilerschirmes ausgebildet wird und, falls signifikant vorhanden, die freie Oberfläche der Flüssigkeitsvorlage jeweils Schaum, der an der Oberfläche des Flüssigkeitsfilms und an der freien Oberfläche der Flüssigkeitsvorlage in Richtung eines Kopfraumes des Entgasungsbehälters aufwächst. Die Schaumbildung kann dabei so intensiv sein, und dies ist beispielsweise bei der Entgasung von Magermilch der Fall, dass sich der gesamte Kopfraum des Entgasungsbehälters mit Schaum füllt und der Schaum dadurch den Entgasungsvorgang zum Stillstand bringt oder wenigstens deutlich hemmt, sodass insgesamt die Prozessführung stark erschwert wird. Gelangt der Schaum dabei in eine ggf. vorhandene Unterdruckquelle, dann muss der Entgasungsprozess ohnehin gestoppt werden.

Es ist bekannt, Schaum auf chemische, mechanische und thermische Weise zu bekämpfen. Eine Bekämpfung durch Zugabe chemischer Mittel scheidet bei flüssigen Nahrungsmittelprodukten in der Regel aus, um Verunreinigung zu vermeiden. Mechanische Schaumzerstörer liefern bei hohen Schaumbildungsraten unbefriedigende Ergebnisse aufgrund zu geringer Leistungsfähigkeit und eines relativ großen und teilweise auch komplizierten Konstruktionsaufwandes, der bezüglich der Herstellung bzw. der Anpassung an die verschiedensten Anwendungserfordernisse getrieben werden muss.

Die Zerstörung unerwünschter Schaumblasen geht aus von der Erkenntnis, dass die Schaumblase zerfällt, wenn deren Volumen nicht mehr stabil ist. Das Volumen einer Schaumblase bestimmt sich aus dem Gleichgewicht zwischen dem Druck des eingesperrten Gases einerseits und der Summe zweier Drücke andererseits, nämlich dem Druck, unter dem der Behandlungsprozess der Flüssigkeit stattfindet, und dem Druck, der durch die Oberflächenspannung der Schaumblase entsteht.

Ziel einer Schaumzerstörung auf thermische Weise, nämlich entweder durch Erwärmung oder durch Abkühlung, muss es daher sein, den vorgenannten Gleichgewichtszustand signifikant zu stören. Eine Erwärmung der Schaumblasen bewirkt eine Erhöhung und eine Abkühlung führt zu einer Erniedrigung des jeweiligen Innendruckes der Schaumblasen. Hierzu offenbart das Dokument DE 21 63 666 A1 als zielführend, den Gleichgewichtszustand zwischen Oberflächenspannung und Innendruck aller oder eines Teiles der zu zerstörenden Schaumblasen durch Änderung des Innendruckes der Schaumblasen zu stören. Diesbezüglich wird vorgeschlagen, den Innendruck durch Aufheizen aller oder eines Teiles der Schaumblasen zu erhöhen, und zwar beispielsweise durch Aufheizen der Schaumblasen auf elektrischen Wege durch Einbau eines elektrisch leitenden Widerstandsdrahtes in die Schaumzone.

Ein weiterer Vorschlag sieht vor, die Schaumblasen durch Einblasen heißer Heizgase in die Schaumzone aufzuheizen. Bei dem ersten Vorschlag sind die Betriebssicherheit und die Temperaturführung problematisch und bei dem zweiten Vorschlag sind aufgrund möglicher Verunreinigungen die notwendige Produkt- und Qualitätssicherheit nicht mehr gegeben. Ein anderer Vorschlag, der zumindest bei geeigneter Ausgestaltung seiner Lösungsmittel die sanitären und hygienischen Erfordernisse erfüllt, die für die im Rahmen der Erfindung zu behandelnden flüssigen Nahrungsmittelprodukte gelten, sieht vor, dass die Schaumblasen mit einem mit wärmeren gasförmigen oder flüssigen Medien beschickten und in der Schaumzone angebrachten Wärmeaustauscher aufgeheizt werden.

Hinter dem letztgenannten Vorschlag bleibt die Offenbarung des Dokumentes DE 37 27 132 A1 zurück, da hier bei einem Verfahren zur Destabilisierung und Zerstörung von Schäumen vorgeschlagen wird, die mechanische Festigkeit des Schaumes in einer an sich bekannten Weise durch Einbringung von thermischer Energie stark herabzusetzen, aber die diesbezügliche Einbringung im Rahmen des hier in Rede stehenden Problems in einer problematischen Zufuhr von Dampf oder erhitztem Gas besteht. Darüber hinaus wird die problematische Zufuhr dieser Stoffe mit Mitteln zur mechanischen Schaumzerstörung oder mit Mitteln zur Ultraschallerzeugung kombiniert, die einen zusätzlichen konstruktiven und kostenträchtigen Aufwand erfordern.

In der DE 43 04 808 A1 sind ein Verfahren und eine Vorrichtung zum Abfüllen von Milch in Behälter beschrieben. Als Behälter werden Flaschen verwendet, wobei die Aufgabe gelöst wird, den bei der Abfüllung von Milch in die Behälter entstandenen Schaum noch während des Abfüllprozesses zu beseitigen und gleichzeitig eine genaue Füllmenge im Behälter zu gewährleisten. Die Lösung dieser Aufgabe besteht unter anderem darin, die Flasche im Unterdruckbereich mit Milch zu überfüllen und sodann die überfüllte Milch durch Unterdruck bis zum vorgegebenen Füllniveau mit allem sich gebildeten Schaum abzusaugen und in einem gesonderten Behältnis zu sammeln. Der zuständige Fachmann entnimmt diesem Stand der Technik die Hinweise, dass es nicht möglich oder zumindest problematisch ist, den Schaum (insbesondere Milchschaum) durch Erwärmung von Einrichtungen, die in den Schaum hineinragen, zu zerstören. Stattdessen wird vorgeschlagen, den sich bildenden Schaum abzusaugen und in einem gesonderten Behältnis zu sammeln.

Die DE 1 017 140 A1 offenbart eine Vorrichtung zur Schaumzerstörung in Flüssigkeitsverdampfern, in denen das Eindampfen der Flüssigkeit insbesondere auch unter Vakuum erfolgt. Hier dient das Vakuum der Absenkung der Verdampfungstemperatur und nicht etwa dem Absaugen des Schaumes. Zur Aussteifung des vakuumfesten Verdampfermantels ist es bekannt, einen Versteifungsring vorzusehen. Der Anmeldungsgegenstand nutzt die bekannte Erkenntnis, dass Schaumblasen an gekühlten Wänden zusammenfallen, und löst die objektive Aufgabe, den Dampfabscheidermantel mit einer reinigungsfreundlichen Versteifung auszugestalten und gleichzeitig diese Versteifung zur Schaumzerstörung zu nutzen. Die Lösung dieser Aufgabe besteht darin, etwa in der Mitte des abgestuften Verdampfermantels einen eingeschweißten Ring vorzusehen, der zur Versteifung des Mantels und zum Hindurchleiten eines Kühlmittels dient. Der zuständige Fachmann entnimmt diesem Stand der Technik den Hinweis, dass es bekannt ist, das Gleichgewicht der Schaumblasen durch Abkühlung zu stören und dadurch eine Zerstörung des Schaumes herbeizuführen und des Weiteren den Behältermantel im Bereich der Schaumbildung von außen nach innen im Durchmesser abzustufen, wobei die Abstufung durch einen Rohrring gebildet wird. Dabei wirkt die durch den Rohrring gebildete Kühlzone nur tangential von außen auf den über den gesamten Verdampferquerschnitt aufwachsenden Schaum ein.

Die DE 10 2004 062 804 B3 beschreibt eine Vorrichtung zum Temperieren von Gegenständen und/oder Medien. Diese Temperierung, eine Erwärmung oder Kühlung, erfolgt mit mindestens einem sog. Thermoelementblock. Dieser Thermoelementblock stellt ein flächiges Gebilde dar, das aus mehreren Peltierelementen besteht, die abwechselnd elektrisch in Reihe, thermisch parallel geschaltet und nach außen mit einer elektrisch isolierenden und thermisch leitenden Schicht abgedeckt sind. Das zu erwärmende oder zu kühlende Medium wird dabei in mindestens einer trichterförmigen Vertiefung aufgenommen, die an ihrer tiefsten Stelle eine Zuflussöffnung und am oberen Rand einen umlaufenden Abflusskanal, der über eine Überlaufkante beschickt wird, aufweist. Die Vertiefung wird von der Zuflussöffnung zum Abflusskanal hin von dem Medium durchströmt. Der Abflusskanal wird außenseits von einer Dichtung umschlossen, über die der Innenraum der Vertiefung mit dem Thermoelementblock abgedichtet verschlossen ist. Zwischen dem die Vertiefung durchströmenden Medium und dem quasi als Deckel der Vertiefung fungierenden flächigen Thermoelementblock findet ein direkter Wärmeaustausch statt (Erwärmung oder Kühlung). Dieser Stand der Technik offenbart keine Anwendung, die auf eine Zerstörung von sich aus einer Flüssigkeit bildendem Schaum hinweist oder eine diesbezügliche Anwendung nahelegt. Weiterhin ist der das jeweilige Medium erwärmende oder kühlende flächige Thermoelementblock weder außenseits umströmbar noch innenseits durchströmbar.

Die GB 726 804 A beschreibt eine Entgasungsvorrichtung für Flüssigkeiten, wobei nahe dem oberen Teil des geschlossenen Gefäßes und oberhalb des Flüssigkeitsspiegels sich ein System eng beabstandeter, gerader, paralleler Rohre befindet, durch die im Betrieb ein Kühlmedium fließt. Sobald der Schaum mit den Rohren in Kontakt kommt, wird er abgekühlt, so dass der Schaum gebrochen wird und der in den Schaumblasen enthaltene Dampf kondensiert.

Es ist Aufgabe der vorliegenden Erfindung, ein Verfahren und eine Vorrichtung zur Steuerung der Schaumbildung in einer Entgasungsvorrichtung für Flüssigkeiten anzugeben, die die Schaumbildung wirksam steuern und begrenzen und dabei das Aufwachsen des Schaumes über ein tolerierbares Maß hinaus unter Sicherstellung der sanitären und hygienischen Erfordernisse der Prozessführung auf dem Gebiet der Behandlung und Verarbeitung flüssiger Nahrungsmittel verhindern.

### ZUSAMMENFASSUNG DER ERFINDUNG

Diese Aufgabe wird durch ein Verfahren mit den Merkmalen des unabhängigen Anspruchs 1 gelöst. Vorteilhafte Ausgestaltungen des Verfahrens sind Gegenstand der Unteransprüche. Eine Entgasungsvorrichtung für Flüssigkeiten mit einer Vorrichtung zur Steuerung der Schaumbildung in der Entgasungsvorrichtung, geeignet zur Durchführung des erfindungsgemäßen Verfahrens, ist Gegenstand des unabhängigen Anspruchs 9. Vorteilhafte Ausgestaltungen der Vorrichtung sind Gegenstand der zugeordneten Unteransprüche. Ein Registersystem für die Vorrichtung zur Steuerung der Schaumbildung der Entgasungsvorrichtung ist Gegenstand des Anspruchs 14 und des Anspruchs 15. Vorteilhafte Ausgestaltungen des Registersystems sind in den zugeordneten Unteransprüchen beansprucht.

Das erfindungsgemäße Verfahren wird mit einer Entgasungsvorrichtung für Flüssigkeiten durchgeführt, der die Flüssigkeit zugeführt, in der die Flüssigkeit zum Zwecke der Gasabscheidung behandelt bzw. mit einer mittleren Verweilzeit verweilt und aus der die Flüssigkeit unterhalb einer von der Flüssigkeit in der Entgasungsvorrichtung gebildeten freien Oberfläche als entgaste Flüssigkeit abgeführt wird. Die Flüssigkeit wird oberhalb der freien Oberfläche und an einer Oberfläche eines Verteilerschirmes als Flüssigkeitsfilm ausgebildet und tritt von dort in die freie Oberfläche ein. Der Flüssigkeitsfilm ist vorzugsweise schirmförmig ausgebildet.

Das erfindungsgemäße Verfahren in seiner generellen Wirkungsweise behandelt einen Schaum, der an der Oberfläche der Flüssigkeit und aus dieser heraus generiert wird und der, ausgehend von dieser Oberfläche, in den freien Raum darüber aufwächst. Bei dieser Oberfläche kann es sich um eine freie Oberfläche der Flüssigkeitsvorlage im Entgasungsbehälter handeln, einem in der Regel in seiner Höhe gesteuerten Niveau dieser Flüssigkeitsvorlage, und/oder um die Oberfläche eines Flüssigkeitsfilms, der an der Oberfläche des ggf. vorhandenen Verteilerschirmes ausgebildet wird. Bei der in Frage kommenden Oberfläche des Flüssigkeitsfilms handelt es sich um jene Oberfläche, die der flüssigkeitsfilmbildenden Oberfläche des Verteilerschirmes abgewandt ist.

Der Schaum wird bei der Entgasungsvorrichtung, von der die vorliegende Erfindung ausgeht, oberhalb und aus der freien Oberfläche heraus und/oder oberhalb des Flüssigkeitsfilms und aus dem Flüssigkeitsfilm heraus jeweils freigesetzt und wächst in beiden Fällen in einen freien Raum oberhalb der den Schaum generierenden Flüssigkeit auf, insbesondere in einen Kopfraum des Entgasungsbehälters. Der Schaum besitzt dabei die Temperatur der Flüssigkeit, ggf. mit einer geringfügig geringeren Temperatur. Unter dem Begriff "Aufwachsen" bzw. einer "Aufwachsrichtung" soll nachfolgend die stattfindende Bewegungsrichtung des Schaumes verstanden werden, wobei diese auch abweichend von der Schwerkraftrichtung verlaufen kann.

Es handelt sich somit bei diesem Aufwachsen des Schaums in allen vorstehend geschilderten Fällen um einen dynamischen Prozess der Schaumausbreitung. An der Grenzfläche der Schaumausbreitung setzt der erfinderische Grundgedanke an. Der jeweilige mit der Flüssigkeits-Temperatur aufwachsende Schaum erfährt, beginnend in einem ersten Heizabstand von der den Schaum freisetzenden freien Oberfläche und beginnend in einem zweiten Heizabstand von dem den Schaum freisetzenden Flüssigkeitsfilm, zunächst eine Erwärmung von der Flüssigkeits-Temperatur auf eine Erwärmungs-Temperatur in einem aus einem Heiz- und einem Kühlregister bestehenden Registersystem. Dieser Heizabstand muss von dem zugeordneten aufwachsenden Schaum zunächst durchmessen werden, bevor die Erwärmung einsetzt. Der jeweilige Heizabstand kann, in Abhängigkeit von der Flüssigkeit, fest vorgegeben oder auch im Entgasungsbehälter einstellbar sein. Dabei ist der Bereich, in dem die Erwärmung stattfindet, gemessen in Aufwachsrichtung, begrenzt und vorgegeben. Die Schaumblasen werden sich durch die lokale Erwärmung, vornehmlich begrenzt in diesem Bereich, durch die thermodynamischen Gesetzmäßigkeiten zwangsläufig ausdehnen, der vorstehend thematisierte Gleichgewichtszustand wird gestört und die Schaumblasen werden instabil. Die Grenzfläche der Schaumausbreitung wird sich durch die Erwärmung forciert fortbewegen.

Der jeweilige weiter aufwachsende erwärmte Schaum erfährt anschließend, beginnend in einem ersten Kühlabstand vom ersten Heizabstand und beginnend in einem zweiten Kühlabstand vom zweiten Heizabstand, eine Abkühlung auf eine Abkühlungs-Temperatur, die die Flüssigkeits-Temperatur unterschreiten kann. Der erste und der zweite Kühlabstand können auch auf die jeweilige zugeordnete schaumgenerierende Oberfläche bezogen werden, wobei der erste Kühlabstand dann größer als der erste Heizabstand und der zweite Kühlabstand dann größer als der zweite Heizabstand sind. Dabei ist der Bereich, in dem die Abkühlung stattfindet, gemessen in Aufwachsrichtung, ebenfalls begrenzt und vorgegeben. Durch die plötzliche Abkühlung der die Schaumblasen umhüllenden Flüssigkeitslamellen wird der Gleichgewichtszustand der Schaumblasen wiederum gestört, und zwar gegensätzlich zur Erwärmung. Die Schaumblasen werden durch die sich ändernde Viskosität der Flüssigkeitslamellen noch instabiler und zerplatzen, wodurch der Schaum in diesem Bereich in sich zusammenfällt und sich auf ein zugeordnetes Flüssigkeitsvolumen reduziert, das in Richtung der Schwerkraft abfließt. Damit ist die Schaumausbreitung, in Aufwachsrichtung gesehen, am Ende der Abkühlung bzw. Abkühlungszone oder in einem tolerierbaren Abstand von diesem Ende beendet.

Die Mittel zur Durchführung des Wärmeaustauschs zur Erwärmung und Abkühlung des Schaumes, nämlich das aus einem Heiz- und einem Kühlregister bestehenden Registersystem, sind in einer Aufwachsrichtung des Schaumes strömungsdurchlässig ausgebildet.

Die Erwärmungs- und/oder die Abkühlungs-Temperatur werden/wird in Abhängigkeit von den Eigenschaften der Flüssigkeit und/oder den physikalischen Randbedingungen eingestellt. Unter den Eigenschaften der Flüssigkeit wird der Volumenstrom, die Viskosität, der Druck, die Temperatur und/oder die Zusammensetzung der Flüssigkeit im Bereich der Zuführung in die Entgasungsvorrichtung verstanden. Unter den Eigenschaften der entgasten Flüssigkeit wird die Sauerstoff-Konzentration im Bereich der Abführung aus der Entgasungsvorrichtung und unter den physikalischen Randbedingungen werden/wird der Druck und/oder das Ergebnis der Schaumzerstörung in der Entgasungsvorrichtung verstanden. Das Ergebnis der Schaumzerstörung zeigt sich darin, ob oberhalb der Abkühlung des Schaumes noch Schaum vorliegt und ggf. weiter aufwächst. Ein aus diesem Schaum generiertes Signal kann dann zur Einstellung der Erwärmungs- und/oder Abkühlungs-Temperatur verwendet werden.

Die Heiz- und Kühlabstände, jeweils unter sich gesehen, sind nicht zwingend unterschiedlich. Im Sinne einer Verfahrensvereinfachung und -optimierung werden sie vorteilhaft, jeweils unter sich gesehen, einander gleich ausgelegt.

Das erfindungsgemäße Verfahren ist grundsätzlich derart angelegt, dass die unterschiedlich temperierten Schaumbereiche, bedingt durch ihre Erwärmung und ihre Abkühlung, entweder begrenzt ineinandergreifen bzw. sich überlappen oder, ohne diesbezüglich ineinanderzugreifen bzw. sich zu überlappen, sich aneinanderreihen. Es hat sich als vorteilhaft erwiesen, wie dies ein Vorschlag vorsieht, wenn ein Erstreckungsbereich des sich erwärmenden und erwärmten Schaumes und ein Erstreckungsbereich des sich abkühlenden und abgekühlten Schaumes, in einer zugeordneten Aufwachsrichtung des Schaumes gesehen, unmittelbar aneinandergereiht sind, ohne sich gegenseitig vollständig oder wenigstens partiell zu überlappen. Bei dieser Ausgestaltung des Verfahrens kann sich der Schaum zunächst über seine gesamte Generierungsfront, aus der er aufwächst, unbehindert erwärmen und ausdehnen, um dann anschließend unter den gleichen Geometriebedingungen eine unbehinderte Abkühlung und Zerstörung zu erfahren.

Die hygienischen und sanitären Erfordernisse, die an die Behandlung und Verarbeitung flüssiger Nahrungsmittel zu stellen sind, werden im Rahmen des erfindungsgemäßen Verfahrens hinreichend dadurch erfüllt, dass die Erwärmung und die Abkühlung des Schaumes durch indirekten Wärmeaustausch erfolgt, beispielsweise an Wänden von Wärmeaustauschern, die in Aufwachsrichtung des Schaumes weitestgehend für diesen durchlässig sind. Als Wärmeträgermedium für den indirekten Wärmeaustausch sind ein Heizmittel, vorzugsweise Heißwasser, und ein Kühlmittel, vorzugsweise Kaltwasser, vorgesehen. Es kann aber auch heißer Dampf oder heißes Gas Verwendung finden. Das Heizmittel weist zielführend und abhängig von der Flüssigkeits-Temperatur der Flüssigkeit vorzugsweise eine Heizmittel-Temperatur bis auf 90 Grad Celsius auf. Das Kühlmittel weist zielführend und ebenfalls abhängig von der jeweiligen Flüssigkeits-Temperatur vorzugsweise eine Kühlmittel-Temperatur bis hinab zu 12 bis 14 Grad Celsius für Milch und bis hinab zu 6 Grad Celsius für Fruchtsäfte auf, wodurch eine Abkühlung des Schaumes auch auf ein Temperaturniveau unterhalb der Flüssigkeits-Temperatur realisierbar ist.

Die Erfindung schlägt weiterhin vor, dass die Erwärmung und/oder die Abkühlung des Schaumes durch direkten Wärmeaustausch auf der Basis des Peltier-Effektes erfolgen/erfolgt. In diesem Falle lässt sich das Heiz- und Kühlregister bei geeigneter Ausführung der Peltier-Elemente sehr reinigungsfreundlich mit Blick auf eine CIP-Reinigung ausgestalten.

Es hat sich als besonders zielführend herausgestellt, wenn eine Kühlleistung im Bereich der Abkühlung des Schaumes größer als eine Heizleistung im Bereich der Erwärmung des Schaumes ausgelegt ist. Über die Bemessungsrelation zwischen einer notwendigen Heiz- und Kühlfläche hinaus, gegeben durch die geometrischen Auslegungsverhältnisse, kann die Relation zwischen Heiz- und Kühlleistung über die wirksame treibende Temperaturdifferenz in den jeweiligen Wärmeaustauschern der Heiz- und Kühlzone verändert werden. Hier stehen als in Grenzen veränderbare Einflussgrößen die Heizmittel- und Kühlmittel-Temperatur zur Verfügung.

Die Erwärmungs- und/oder die Abkühlungs-Temperatur werden/wird, wie dies ein weiterer Vorschlag vorsieht, mittels einer vor oder im Zuge der Inbetriebnahme der Entgasungsvorrichtung erstellten und hinterlegten Einstellfunktion eingestellt. In dieser Einstellfunktion sind die optimalen Bedingungszusammenhänge zwischen den Eigenschaften der zu entgasenden und der entgasten Flüssigkeit und/oder den physikalischen Randbedingungen einerseits und der Erwärmungs- und der Abkühlungs-Temperatur andererseits hinterlegt, sodass ein vollautomatisiertes Verfahren zur Steuerung der Schaumbildung in der Entgasungsvorrichtung für Flüssigkeiten durchführbar ist.

Die Entgasungsvorrichtung für Flüssigkeiten mit einer Vorrichtung zur Steuerung der Schaumbildung in der Entgasungsvorrichtung, geeignet zur Durchführung des erfindungsgemäßen Verfahrens, besteht in an sich bekannter Weise aus einem Entgasungsbehälter, der einen Eintritt für die Flüssigkeit besitzt und einen Austritt für eine entgaste Flüssigkeit aufweist, der im untersten, zentralen Bereich aus dem Entgasungsbehälter ausmündet. Die Flüssigkeit bildet in dem Entgasungsbehälter eine freie Oberfläche aus, deren Niveau vorzugsweise von einer Niveausteuereinrichtung gesteuert wird. Oberhalb der freien Oberfläche ist ein Verteilerschirm angeordnet, der vorzugsweise schirmförmig ausgebildet ist und an dessen Oberfläche die Flüssigkeit als Flüssigkeitsfilm ausgebildet wird. Es ist ein Zulaufrohr vorgesehen, das einerseits endseitig mit dem Eintritt und andererseits endseitig mit einem am oberen Ende des Verteilerschirmes ausmündenden Umfangsringspalt in Verbindung steht. Über den Umfangsringspalt wird die Flüssigkeit für den Flüssigkeitsfilm ausgebracht.

Die Vorrichtung zur Steuerung der Schaumbildung in der Entgasungsvorrichtung zeichnet sich erfindungsgemäß dadurch aus, dass ein aus einem Heiz- und einem Kühlregister bestehendes Registersystem vorgesehen ist, das mit dem Heizregister die freie Oberfläche und die flüssigkeitsfilmbildende Oberfläche des Verteilerschirms im Bereich der Schaumbildung ringförmig und von der freien Oberfläche mit einem ersten Heizabstand und von der flüssigkeitsfilmbildenden Oberfläche des Verteilerschirms mit einem zweiten Heizabstand beabstandet umschließt. Das Kühlregister ist, in einer jeweiligen Aufwachsrichtung des Schaumes gesehen, gegenüber dem Heizregister im Bereich der freien Oberfläche um einen ersten Kühlabstand und im Bereich des Verteilerschirmes um einen zweiten Kühlabstand versetzt angeordnet.

Unter dem Heiz- und dem Kühlregister für den indirekten Wärmeaustausch soll jeweils ein Wärmeaustauscher verstanden werden, der eine Vielzahl von hohlen Gebilden aufweist, die jeweils von ebenen oder gekrümmten Wänden begrenzt sind. Die hohlen Gebilde werden innenseits von dem Wärmeträgermedium, dem Heiz- oder Kühlmittel, durchströmt. Die hohlen Gebilde sind im Verbund miteinander außenseits in der Aufwachsrichtung des Schaumes strömungsdurchlässig. Die ebenen Wände bilden durchströmbare Kammern, die unterschiedliche Geometrien, wie beispielsweise rechteckförmige, quadratische oder dreieckförmige, aufweisen können. Die gekrümmten Wände begrenzen beispielsweise ovale, elliptische oder kreisförmige Durchströmungsquerschnitte. Die hohlen Gebilde werden innenseits von einem Wärmeträgermedium durchströmt, einem Heizmittel im Heizregister und einem Kühlmittel im Kühlregister.

Das Heiz- und/oder das Kühlregister für den direkten Wärmeaustausch ist gemäß einem Vorschlag jeweils als Peltier-Element ausgebildet.

Dem Registersystem ist eine Steuereinrichtung zugeordnet, die eine Heizleistung des Heizregisters und/oder eine Kühlleistung des Kühlregisters in Abhängigkeit von den Eigenschaften der Flüssigkeit und/oder den physikalischen Randbedingungen verändert. Die Steuereinrichtung ist mit einer Messeinrichtung verbunden, die wenigstens eine der Eigenschaften der Flüssigkeit und der entgasten Flüssigkeit und/oder die physikalischen Randbedingungen ermittelt. Die Messeinrichtung kann mit Blick auf die physikalischen Randbedingungen so eingerichtet sein, dass sie eine Messeinrichtung für die Detektion von Schaum ist (z.B. Schaumsensor), wobei dieser Schaum oberhalb des Kühlregisters aufwächst und dort ein Schaumsignal generiert, das an die Steuereinrichtung übermittelt wird.

Es hat sich als vorteilhaft und besonders zielführend erwiesen, wenn sich die Steuerung der Schaumbildung in der Entgasungsvorrichtung unmittelbar am Ergebnis des Entgasungsvorganges orientiert. Hierzu sieht eine Ausgestaltung vor, dass die Messeinrichtung eine Messeinrichtung für Sauerstoff ist, die im oder am Austritt oder in einer aus dem Austritt ausmündenden Rohrleitung eine Sauerstoff-Konzentration der entgasten Flüssigkeit ermittelt und an die Steuereinrichtung übermittelt.

Der Entgasungsvorgang wird intensiviert, wenn an einen Kopfraum des Entgasungsbehälters eine Unterdruckquelle in Gestalt einer Flüssigkeitsringpumpe oder in Gestalt eines einstufigen oder mehrstufigen Ejektors angeschlossen ist.

Die Erfindung schlägt weiterhin für den indirekten Wärmeaustausch unter Verwendung jeweils eines Wärmeträgermediums Ausführungsformen des Registersystems für die Vorrichtung zur Steuerung der Schaumbildung in der Entgasungsvorrichtung für Flüssigkeiten vor, wobei das Registersystem aus einem Heiz- und einem Kühlregister besteht und die Entgasungsvorrichtung, geeignet zur Durchführung des erfindungsgemäßen Verfahrens, vorstehend beschrieben wurde.

Eine gleichmäßige Behandlung und Zerstörung des Schaumes sowie eine vereinfachte konstruktive Ausführung werden erreicht, wenn das Heiz- und Kühlregister jeweils den Verteilerschirm axialsymmetrisch umschließen und wenn darüber hinaus sowohl der erste und der zweite Heizabstand unter sich als auch der erste und der zweite Kühlabstand unter sich jeweils einander gleich sind.

Es hat sich mit Blick auf eine wirksame Schaumzerstörung als besonders zielführend erwiesen, wenn eine gesamte Kühlfläche des Kühlregisters größer als eine gesamte Heizfläche des Heizregisters ausgelegt ist. Unter gesamter Kühl- und gesamter Heizfläche soll jeweils die Summe aller erwärmend oder abkühlend auf den Schaum einwirkenden Wärmeaustauscherflächen des Kühl- und Heizregister verstanden werden.

Eine konstruktiv einfache und die hygienischen und sanitären Erfordernisse bei der Behandlung und Verarbeitung flüssiger Nahrungsmittelprodukte sicherstellende Ausführungsform ist nach einem Vorschlag gegeben, wenn das Heizregister aus ersten Rohren und das Kühlregister aus zweiten Rohren besteht. Dabei sind die ersten Rohre und die zweiten Rohre, jeweils für sich, reihenförmig nebeneinander und voneinander beabstandet angeordnet. In Bezug zur jeweils schaumgenerierenden Oberfläche in dem Entgasungsbehälter sind die ersten Rohre von der freien Oberfläche mit dem ersten Heizabstand und von der flüssigkeitsfilmbildenden Oberfläche des Verteilerschirms mit dem zweiten Heizabstand positioniert. Das dergestalt ebenfalls mit Rohren realisierte Kühlregister ist gegenüber dem Heizregister, in der jeweiligen Aufwachsrichtung des Schaumes gesehen, versetzt angeordnet, und zwar dadurch, dass die zweiten Rohre mit dem ersten Kühlabstand, ausgehend von dem ersten Heizabstand, und mit dem zweiten Kühlabstand, ausgehend von dem zweiten Heizabstand, positioniert sind. Quer zur jeweiligen Aufwachsrichtung sind die ersten und zweiten Rohre ebenfalls gegeneinander versetzt angeordnet, und zwar in einfacher Weise dadurch, dass zweite Rohre in den und verteilt auf die jeweiligen Lücken zwischen den ersten Rohren positioniert sind.

Um zu verhindern, dass das mit Rohren realisierte Kühlregister nicht in das Heizregister eingreift bzw. sich mit diesem in Gänze oder in Teilbereichen überlappt, wird vorgeschlagen, dass der erste und der zweite Kühlabstand jeweils stets größer als ein größter erster Durchmesser der ersten Rohre im zugeordneten Kühlabstand ist. Eine Vereinfachung der jeweiligen Konstruktion ist gegeben, wenn die ersten Rohre und die zweiten Rohre jeweils unter sich durchmessergleich sind, und die gewünschte Relation zwischen Kühl- und Heizfläche lässt sich unter den vorstehenden Durchmessergegebenheiten leichter und flexibler auslegen, wenn das erste Rohr einen größeren Durchmesser als das zweite Rohr aufweist.

Es wird weiter vorgeschlagen, die ersten Rohre und/oder die zweiten Rohre jeweils als Monorohr auszubilden. Durch diese Ausführung werden strömungstechnische Probleme bei der Verteilung des Heiz- und Kühlmittels vermieden. Es ist weiterhin vorgesehen, das erste Rohr und das zweite Rohr, jeweils ausgebildet als Monorohr, in einem der freien Oberfläche zugeordneten Bereich jeweils spiralförmig und in einem der flüssigkeitsfilmbildenden Oberfläche des Verteilerschirmes zugeordneten Bereich jeweils wendelförmig gewickelt auszuführen. Diese Ausführung schafft weiterhin die Möglichkeit, die derart gewickelten Monorohre, bezogen auf die Aufwachsrichtung des Schaumes und quer hierzu, sehr einfach so anzuordnen, dass sie, in Aufwachsrichtung gesehen, einerseits jeweils strömungsdurchlässig sind und andererseits die erforderliche Reihenschaltung des Heiz- und Kühlregisters realisieren. Dies gelingt zweckmäßig dadurch, dass die Monorohre der Kühlzone einerseits in Aufwachsrichtung axial versetzt zu den Monorohren der Heizzone angeordnet und andererseits, in radialer Richtung, über den jeweiligen Lücken zwischen den Monorohren der Heizzone positioniert sind. Eine diesbezügliche vorteilhafte Ausführungsform sieht vor, dass jeweils zwei zweite Rohre über der jeweiligen Lücke zwischen zwei benachbarten ersten Rohren symmetrisch und gleichverteilt positioniert sind.

Hinsichtlich einer einfachen und leicht zu variierenden Justierung und Befestigung des Registersystems in beliebiger Ausgestaltung oder in der Ausgestaltung mit ersten und zweiten Rohren werden zwei Lösungen vorgeschlagen. Beide Lösungen sehen gleichermaßen vor, dass sich das Heiz- und Kühlregister an dem Entgasungsbehälter über mehrere Träger abstützt, die über den Umfang des Entgasungsbehälters gleichverteilt angeordnet sind und sich sternförmig zum Zentrum des Entgasungsbehälters hin erstrecken. Die erste Lösung zeichnet sich dadurch aus, dass sich der Verlauf jedes Trägers in Bezug zum Heizregister aus einer unteren Kontur des Heizregisters ergibt, an die sich jeder Träger von unten anschmiegt. Bei der zweiten Lösung ergibt sich der Verlauf jedes Trägers in Bezug zum Heizregister aus der Positionierung des ersten Rohres, an die sich jeder Träger von unten tangential anschmiegt. Bei beiden Lösungen werden vorzugsweise vier Träger vorgesehen.

Bei der Ausgestaltung des Registersystems mit ersten und zweiten Rohren gelingt die erfindungsgemäß geforderte Positionierung und Befestigung der Rohre sowohl in Aufwachsrichtung des Schaumes als auch quer hierzu auf sehr einfache Weise dadurch, dass als Bezugslinie zur Positionierung und Befestigung eine gedachte Berührungslinie genutzt wird, die sich aus den Berührungspunkten zwischen den ersten Rohren und dem jeweils tangential an diesen anliegenden Träger ergibt. Im Verlauf der Berührungslinie sind Halterungsmittel für die ersten und die zweiten Rohre an dem Träger vorgesehen, die mit dem Träger fest verbunden sind. Die Halterungsmittel sind vorzugsweise blechförmig ausgebildet und hochkant einerseits in Richtung einer Längsachse des Entgasungsbehälters und andererseits in Richtung der Berührungslinie ausgerichtet, wodurch das Aufwachsen des Schaumes möglichst wenig gehemmt wird. Zwei benachbarte Halterungsmittel fixieren dabei jeweils ein erstes Rohr und mindestens ein zweites Rohr in Richtung der Berührungslinie unverschieblich.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen realisiert ist, wird in der Zeichnung ein bevorzugtes Ausführungsbeispiel einer Entgasungsvorrichtung für Flüssigkeiten, ausgebildet mit einem unteren, seitlichen Eintritt und kombiniert mit einer erfindungsgemäßen Vorrichtung zur Steuerung der Schaumbildung in der Entgasungsvorrichtung, geeignet zur Durchführung des erfindungsgemäßen Verfahrens, beschrieben. Darüber hinaus wird ein bevorzugtes Ausführungsbeispiel eines Registersystems, das aus einem Heiz- und einem Kühlregister besteht, für die erfindungsgemäße Vorrichtung dargestellt und nachfolgend nach Aufbau und Funktion beschrieben. Es zeigen
- **Figur 1**: eine Entgasungsvorrichtung zweiter Art nach dem Stand der Technik, ausgebildet mit einem unteren, zentralen Eintritt, von der die vorliegende Erfindung bis auf eine Modifikation der Positionierung des Eintritts, gezeigt in **Figur 2**, ausgeht;
- **Figur 2**: in perspektivischer und transparenter Darstellung eine bevorzugte Ausführungsform einer Entgasungsvorrichtung erster Art, ausgebildet mit einem unteren, seitlichen Eintritt, von der die vorliegende Erfindung ausgeht, zusammen mit der erfindungsgemäßen Vorrichtung, einem Registersystem, bestehend aus einem Heiz- und einem Kühlregister;
- **Figur 3**: in perspektivischer Darstellung die Entgasungsvorrichtung gemäß **Figur 2**, wobei durch Weglassen eines Mantels und eines oberen Bodens des Entgasungsbehälters die erfindungsgemäße Vorrichtung freiliegt, und in schematischer Darstellung eine Steuereinrichtung mit zugeordneten Mitteln zur Beaufschlagung eines Heiz- und Kühlregisters mit einem Heiz- und Kühlmittel;
- **Figur 4**: in der Vorderansicht die Entgasungsvorrichtung gemäß den **Figuren 2** und **3** in einer in Figur 3 mit "**Z**" gekennzeichneten Blickrichtung;
- **Figur 5**: in der Draufsicht die Entgasungsvorrichtung gemäß den **Figuren 2** bis **4**;
- **Figur 6**: im Meridianschnitt die Entgasungsvorrichtung gemäß den **Figuren 2** bis **5** entsprechend einem in **Figur 5** mit **A-A** gekennzeichneten Schnittverlauf;
- **Figur 7**: in vergrößerter Darstellung einen in **Figur 6** mit "**B**" gekennzeichneten ersten Ausschnitt im Bereich der erfindungsgemäßen Vorrichtung;
- **Figur 8**: in nochmals vergrößerter Darstellung einen in **Figur 7** mit "**C**" gekennzeichneten zweiten Ausschnitt aus dem ersten Ausschnitt gemäß **Figur 7** und
- **Figur 9**: in Vorderansicht und Draufsicht ein in den **Figuren 7** und **8** dargestelltes Halterungsmittel für Rohre des erfindungsgemäßen Heiz- und Kühlregisters in einer vergrößerten Darstellung.

### DETAILLIERTE BESCHREIBUNG

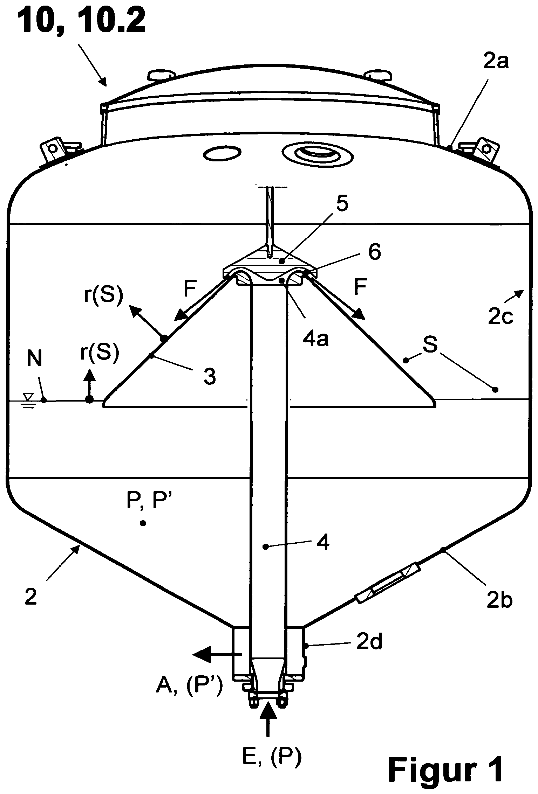

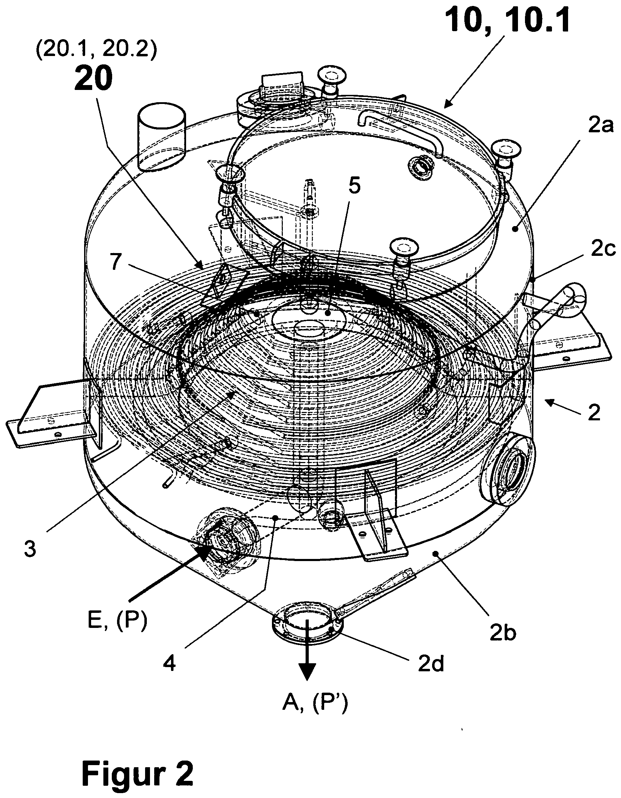

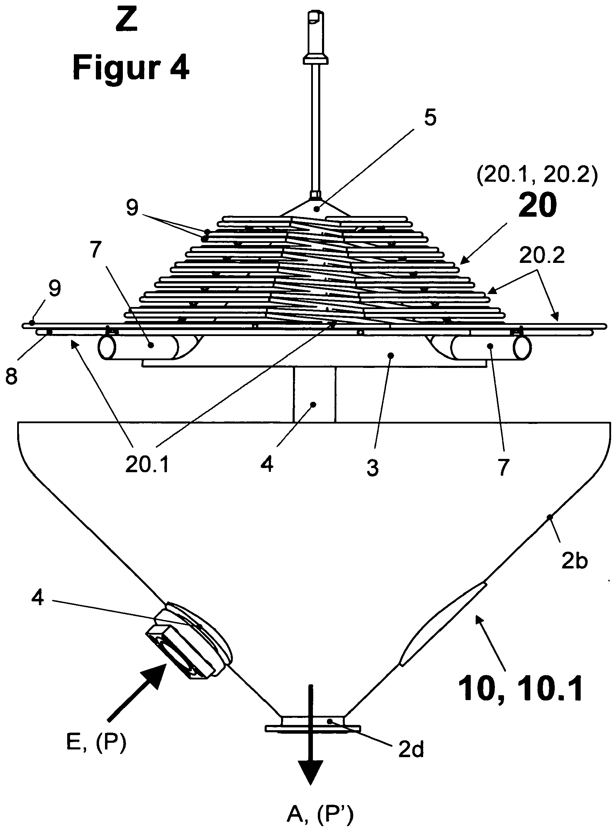

Die Erfindung geht aus von einer Entgasungsvorrichtung 10 für Flüssigkeiten P nach dem Stand der Technik, und zwar entweder in einer Ausführung zweiter Art, nachfolgend als Entgasungsvorrichtung 10.2 bezeichnet, wie sie in **Figur 1** zur Beschreibung des generellen Aufbaus der in Rede stehenden Entgasungsvorrichtung dargestellt ist, oder in einer Ausführung erster Art, nachfolgend als Entgasungsvorrichtung 10.1 bezeichnet, wie sie in den **Figuren 2** bis **6** in Verbindung mit einer erfindungsgemäßen Vorrichtung, deren wesentlicher Teil in einem Registersystem 20 besteht, offenbart ist. Die Entgasungsvorrichtung 10, 10.2 besteht aus einem Entgasungsbehälter 2 in Form eines im Wesentlichen zylinderförmigen Behältermantels 2c mit einem unteren Boden 2b und einem oberen Boden 2a. Der untere Boden 2b weist einen zentralen Ablaufstutzen 2d mit einem Austritt A für eine entgaste Flüssigkeit P' auf, wobei der Ablaufstutzen 2d von einem von unten in den Entgasungsbehälter 2 eingreifenden Zulaufrohr 4 mit einem Eintritt E für die Flüssigkeit P konzentrisch durchdrungen ist. Ein Verteilerschirm 3 ist am oberen Ende des in den Entgasungsbehälter 2 hineingeführten Zulaufrohres 4 mit letzterem dergestalt fest verbunden, dass das Zulaufrohr 4 innenseits über eine zum Verteilerschirm 3 vorzugsweise hinreichend gerundete Austrittsöffnung 4a zentrisch im Verteilerschirm 3 ausmündet. Das Zulaufrohr 4 stellt eine Verbindung mit einem Umfangsringspalt 6 her, der zwischen dem oberen Ende des Verteilerschirms 3 und einer zu letzterem oberhalb beabstandeten und konzentrisch angeordneten Prallplatte 5 gebildet ist. Die Prallplatte 5 übergreift dabei das obere Ende des Verteilerschirmes 3 ein Stück weit, und sie ist auf ihrer dem oberen Boden 2a zugewandten Seite axial geführt und befestigt und in ihrem Abstand zum oberen Ende des Verteilerschirms 3 in Grenzen verstellbar. Die über den Eintritt E zugeführte Flüssigkeit P verlässt das Zulaufrohr 4 über die Austrittsöffnung 4a, wird dort von der Prallplatte 5 umgelenkt und über den Umfangsringspalt 6 sternförmig und, radial gesehen, von innen nach außen auf den Verteilerschirm 3 aufgebracht und an dessen Oberfläche als Flüssigkeitsfilm F ausgebildet. Aus der dem Verteilerschirm 3 abgewandten Oberfläche des Flüssigkeitsfilms F, der über den Verteilerschirm 3 herabläuft, können sich Gasbeimengungen infolge des Auftriebs leicht abscheiden. Mit einer nicht dargestellten Niveausteuereinrichtung wird eine freie Oberfläche N bzw. ein Niveau N der bereits weitestgehend entgasten bzw. noch zu entgasenden Flüssigkeit P', P, die eine Flüssigkeitsvorlage im Entgasungsbehälter 2 bildet, eingestellt. Der teilentgaste bzw. weitestgehend entgaste Flüssigkeitsfilm F tritt am unteren Ende des Verteilerschirms 3 in die freie Oberfläche N ein. Die über den Verteilerschirm 3 in Form des Flüssigkeitsfilms F auf die freie Oberfläche N aufgeschichteten und in diese eintretenden Flüssigkeitsfraktionen verweilen mit einer mittleren Verweilzeit in dem Entgasungsbehälter 2 und können dort mit Hilfe des Gasblasenauftriebs über die freie Oberfläche N weiter entgasen.

Der Verteilerschirm 3 und die mit diesem korrespondierende erste Prallplatte 5 sind zweckmäßig kreisförmig und jeweils schirmförmig, d.h. radial nach außen abfallend, ausgeführt. In einer bevorzugten Ausführungsform besitzt der Verteilerschirm 3, wie dargestellt, eine kegelige bzw. kegelförmige Ausbildung, wobei der Winkel an der Kegelspitze bis auf ca. 80 bis 90 Grad reduziert sein kann. Das untere Ende des Verteilerschirms 3 reicht im Regelfall bis an die freie Oberfläche N heran oder taucht geringfügig in diese ein.

Falls bei der Entgasung der Flüssigkeit P Schaum S gebildet wird, so wird dieser zum einen Teil aus der Flüssigkeitsvorlage unterhalb des freien Niveaus N und zum anderen Teil aus dem Flüssigkeitsfilm F heraus generiert. Dieser Schaum S wird oberhalb und aus der freien Oberfläche N heraus und/oder oberhalb des Flüssigkeitsfilms F und aus dem Flüssigkeitsfilm F heraus jeweils freigesetzt und wächst in Richtung eines von dem Behältermantel 2c gebildeten Innenraumes und in Richtung eines von dem oberen Boden 2a gebildeten Kopfraumes auf. Eine jeweilige Aufwachsrichtung des Schaumes ist mit r(S) bezeichnet.

Die weiteren in der **Figur 1** dargestellten und nicht bezeichneten Bauteile, wie beispielsweise ein Kopfloch, diverse Anschlüsse und Stutzen sowie Schaugläser, sind, ebenso wie die untere und zentrale Anordnung des Eintritts E, für die hier in Rede stehende Erfindung nicht von Bedeutung.

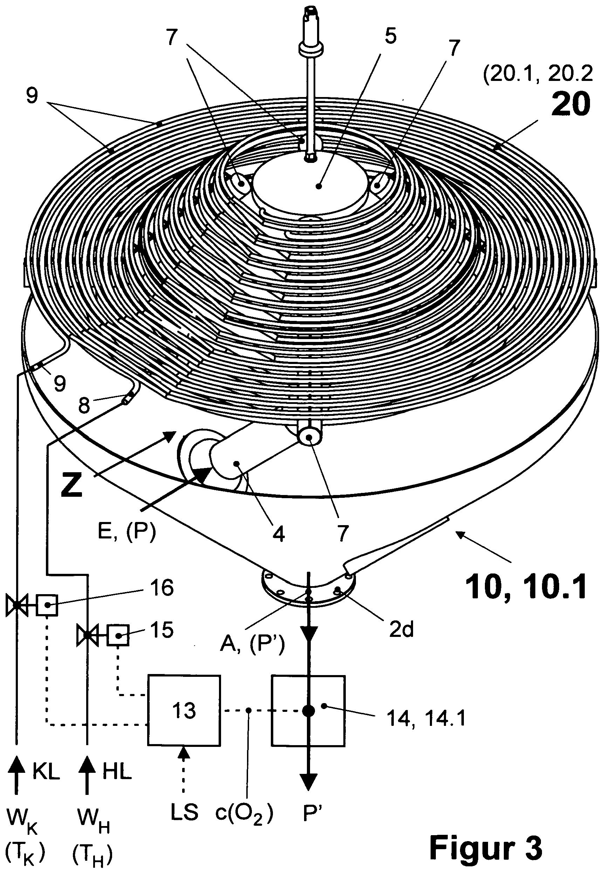

Die Erfindung ist in der Entgasungsvorrichtung 10.1 für Flüssigkeiten P, eine Ausführung zweiter Art, konkret ausgeführt **(****Figuren 2** bis **6**), Sie unterscheidet sich im Wesentlichen nur durch den Ort der Anordnung des Eintritts E von der Entgasungsvorrichtung 10.2, der Ausführung zweiter Art. Das Einlaufrohr 4 ist von der Seite in den unteren Boden 2b eingeführt und somit bleibt der Ablaufstutzen 2d mit seinem Austritt A frei und ungeschmälert. Dieser Unterschied ist für die vorliegende Erfindung ohne Bedeutung. In der transparenten Darstellung der **Figur 2** und in den **Figuren 3** bis **8** ist im Unterschied zur Entgasungsvorrichtung 10.2 ein erfindungsgemäßes Registersystem 20 ersichtlich, bestehend aus einem Heizregister 20.1 und einem Kühlregister 20.2, das nachfolgend noch beschrieben wird.

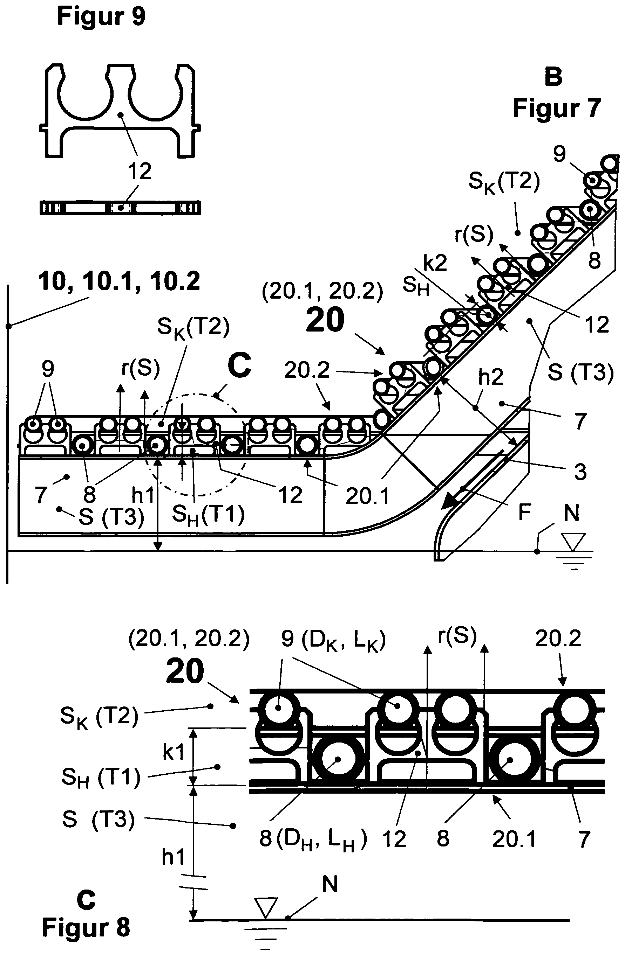

Das Registersystem 20 in einer generalisierten und nicht im Einzelnen dargestellten Ausführungsform umschließt mit seinem Heizregister 20.1 die freie Oberfläche N und die flüssigkeitsfilmbildende Oberfläche des Verteilerschirms 3 im Bereich der Schaumbildung ringförmig und ist dabei von der freien Oberfläche N mit einem ersten Heizabstand h1 und von der flüssigkeitsfilmbildenden Oberfläche des Verteilerschirms 3 mit einem zweiten Heizabstand h2 beabstandet **(****Figuren 7, 8** und **6**). Das Heizregister 20.1 ist für den indirekten und den direkten Wärmeaustausch mit einer Heizleistung HL und das Kühlregister 20.2 ist in der entsprechenden Betriebsweise mit einer Kühlleistung KL ausgelegt.

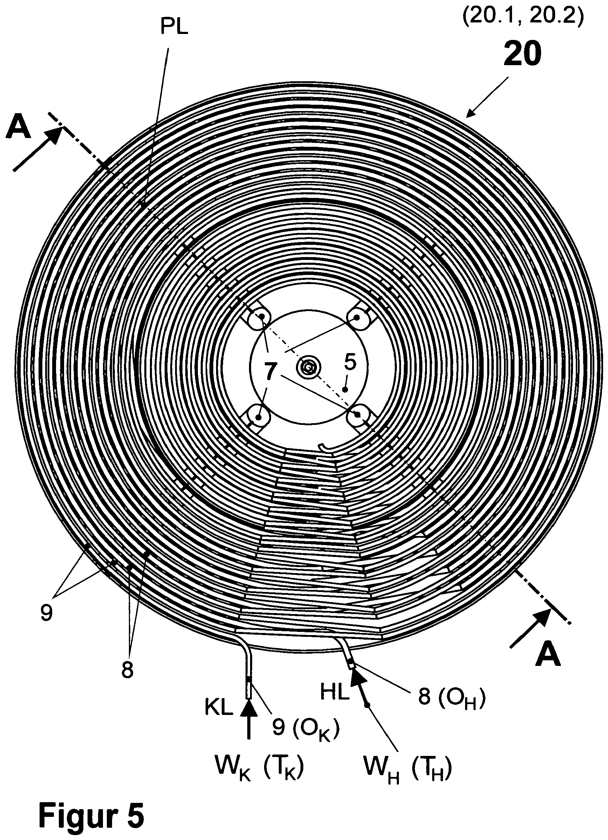

Im Rahmen des indirekten Wärmeaustauschs ist das Heizregister 20.1 von einem Heizmittel W_{H}, das eine Heizmittel-Temperatur T_{H} aufweist, und das Kühlregister 20.2 ist von einem Kühlmittel W_{K}, das eine Kühlmittel-Temperatur T_{K} aufweist, durchströmt (**Figuren 3** und **5**). Das Kühlregister 20.2 ist, in der jeweiligen Aufwachsrichtung des Schaumes r(S) gesehen, gegenüber dem Heizregister 20.1 im Bereich der freien Oberfläche N um einen ersten Kühlabstand k1 und im Bereich des Verteilerschirmes 3 um einen zweiten Kühlabstand k2 versetzt angeordnet **(****Figuren 7, 8** und **6**). Das Heiz- und Kühlregister 20 umschließt jeweils den Verteilerschirm 3 vorzugsweise axialsymmetrisch. Der erste und der zweite Heizabstand h1, h2 und/oder der erste und der zweite Kühlabstand k1, k2 sind jeweils unter sich vorzugsweise einander gleich ausgeführt. Eine gesamte Kühlfläche O_{K} des Kühlregisters 20.2 ist vorzugsweise größer als eine gesamte Heizfläche O_{H} des Heizregisters 20.1 ausgelegt.

Dem Heiz- und Kühlregister 20 ist eine Steuereinrichtung 13 zugeordnet, die die Heizleistung HL, im vorliegenden Ausführungsbeispiel den Volumenstrom des Heizmittels W_{H}, und/oder die Kühlleistung KL, entsprechend den Volumenstrom des Kühlmittels W_{K}, in Abhängigkeit von den Eigenschaften der Flüssigkeiten P, P' und/oder den physikalischen Randbedingungen verändert (**Figur 3**). Die Steuereinrichtung 13 ist mit einer Messeinrichtung 14, 14.1 verbunden, die wenigstens eine der Eigenschaften der Flüssigkeiten P, P' und/oder die physikalischen Randbedingungen ermittelt. Über ein mit der Steuereinrichtung 13 signaltechnisch in Verbindung stehendes erstes Ventil 15 wird der Durchfluss des Heizmittels W_{H} durch das Heizregister 20.1 und über ein zweites Ventil 16 wird der Durchfluss des Kühlmittels W_{K} durch das Kühlregister 20.2 gesteuert.

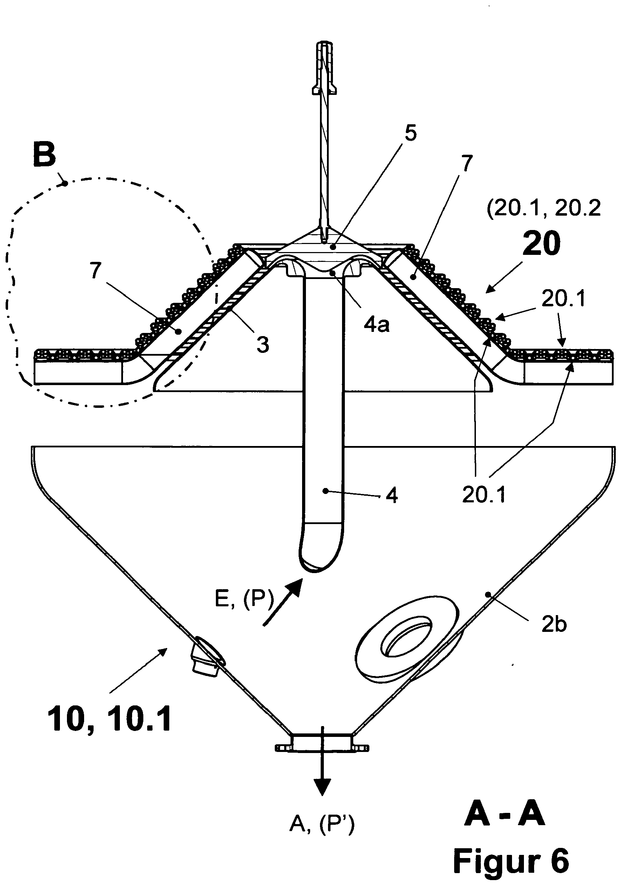

Nach einer vorteilhaften und bevorzugten Ausführungsform besteht das Heizregister 20.1 aus ersten Rohren 8 und das Kühlregister 20.2 aus zweiten Rohren 9 **(****Figuren 2** bis **8**). Die ersten Rohre 8 und die zweiten Rohre 9 sind, jeweils für sich, reihenförmig nebeneinander und voneinander beabstandet angeordnet **(****Figuren 6** bis **8**). Die ersten Rohre 8 sind von der freien Oberfläche N mit dem ersten Heizabstand h1 und von der flüssigkeitsfilmbildenden Oberfläche des Verteilerschirms 3 mit dem zweiten Heizabstand h2 positioniert. Der notwendige Versatz der ersten und der zweiten Rohre zueinander und in der Aufwachsrichtung r(S) des Schaumes S gesehen ist dadurch sichergestellt, dass die zweiten Rohre 9 mit dem ersten Kühlabstand k1, ausgehend von dem ersten Heizabstand h1, und mit dem zweiten Kühlabstand k2, ausgehend von dem zweiten Heizabstand h2, positioniert sind. Eine vollständige Überdeckung der schaumgenerierenden Oberflächen wird dadurch sichergestellt, dass zweite Rohre 9 über den und verteilt auf die jeweiligen Lücken zwischen den ersten Rohren 8 angeordnet sind.

Wenn, wie dies vorzugsweise vorgesehen ist, der erste und der zweite Kühlabstand k1, k2 jeweils stets größer als ein größter erster Durchmesser D_{H} der ersten Rohre 8 im zugeordneten Kühlabstand k1, k2 ist, wird ein vollständiges oder wenigstens teilweises Ineinandergreifen bzw. eine diesbezügliche Überlappung von Heiz- und Kühlregister 20.1, 20.2 verhindert.

Die ersten Rohre 8 und die zweiten Rohre 9 sind jeweils unter sich vorzugsweise durchmessergleich ausgeführt, und das erste Rohr 8 weist dabei vorzugsweise einen größeren Durchmesser, den ersten Durchmesser D_{H}, als das zweite Rohr 9 mit einem zweiten Durchmesser D_{K} auf.

Die Konstruktion des Registersystems 20 in der Rohrausführung vereinfacht sich wesentlich, wenn die ersten Rohre 8 und/oder die zweiten Rohre 9 jeweils als Monorohr ausgebildet sind. Eine weitere Vereinfachung der Konstruktion ergibt sich dadurch, dass das erste Rohr 8 und das zweite Rohr 9, jeweils ausgebildet als Monorohr, in einem der freien Oberfläche N zugeordneten Bereich jeweils spiralförmig und in einem der flüssigkeitsfilmbildenden Oberfläche des Verteilerschirmes 3 zugeordneten Bereich jeweils wendelförmig gewickelt ausgeführt sind. Eine einfache und lückenlose Überdeckung der schaumgenerierenden Oberflächen wird vorzugsweise dadurch erreicht, dass jeweils zwei zweite Rohre 9 über der jeweiligen Lücke zwischen zwei benachbarten ersten Rohren 8 symmetrisch und gleichverteilt positioniert sind (**Figuren 8** und **9**).

Mit Blick auf eine zweckmäßige und zielführende Auslegung des Registersystems 20 in der rohrförmigen Ausgestaltung und hier vorzugsweise in der jeweiligen Ausführung als Monorohrwärmeaustauscher, insbesondere mit Blick auf das Verhältnis zwischen Heiz- und Kühlfläche O_{H}, O_{K}, sieht die konkrete gegenständliche Ausführung diesbezüglich beispielsweise vor, die Kühlfläche O_{K} über das zweite Rohr 9 so auszulegen, dass es den zweiten Durchmesser D_{K} = 8 mm und eine Gesamtlänge, eine zweite Länge L_{K}, aufweist. Die Heizfläche O_{H} wird im Kontext zur vorg. Kühlfläche O_{K} über das erste Rohr 8 so ausgelegt, dass es den ersten Durchmesser D_{H} = 10mm und eine Gesamtlänge, eine erste Länge L_{H} = L_{K}/2, aufweist. Hinsichtlich des vorstehend geforderten Verhältnisses zwischen Kühlleistung KL und Heizleistung HL ergibt sich damit im Ausführungsbeispiel ein Verhältnis von Kühlfläche O_{K} und Heizfläche O_{H} von
O_{K}/O_{H} = d_{K} L_{K}/d_{H} L_{H} = 8 L_{K}/10 L_{H} = 8 L_{K}/(10 L_{K}/2) = 2 x 8/10 = 1,6 ,
womit die Bedingung, dass die Kühlfläche O_{K} größer als die Heizfläche O_{H} auszulegen ist, hinreichend erfüllt ist.

Das Registersystem 20 zeigt eine Form, wie sie insbesondere aus den **Figuren 2** bis **7** ersichtlich und dem Verlauf der freien Oberfläche N und dem Verlauf des Verteilerschirmes 3 geschuldet ist. Wesentlich bei der Ausgestaltung des Registersystems 20 ist, dass die Schaumbildung in Aufwachsrichtung des Schaumes r(S) nicht oder nur unwesentlich von den ersten und zweiten Rohren 8, 9 behindert wird. Zu diesem Zweck sind die ersten und zweiten Rohre 8, 9 einerseits hinreichend voneinander beabstandet und andererseits jedoch so zahlreich, dass eine allumfassende und hinreichende thermische Behandlung des Schaumes S sichergestellt ist.

Eine Erwärmungs- und/oder eine Abkühlungs-Temperatur T1, T2 des Schaumes S (**Figuren 7** und **8**) werden/wird in Abhängigkeit von den Eigenschaften der Flüssigkeit P und den physikalischen Randbedingungen über die Steuereinrichtung 13 (**Figur 3**) mit Hilfe des Heizmittels W_{H} mit der Heizmittel-Temperatur T_{H} und des Kühlmittels W_{K} mit der Kühlmittel-Temperatur T_{K} eingestellt, sodass dadurch eine Steuerung der Schaumbildung möglich ist.

Der Schaum S wächst näherungsweise mit einer Flüssigkeits-Temperatur T3 aus der freien Oberfläche N und/oder aus dem Flüssigkeitsfilm F auf und befindet sich zunächst im Bereich des ersten und des zweiten Heizabstandes h1, h2 (**Figuren 7, 8**). Ein sich an der Heizfläche O_{H} erwärmender und erwärmter Schaum S_{H}, letzterer mit der Erwärmungs-Temperatur T1, befindet sich im Bereich des ersten und des zweiten Kühlabstandes k1, k2, und ein sich abkühlender und abgekühlter Schaum S_{K}, letzterer mit der Abkühlungs-Temperatur T2, der im Zuge der Abkühlung zu Flüssigkeit zerfällt, befindet sich im Bereich oberhalb des ersten und des zweiten Kühlabstandes k1, k2.

Das Registersystem 20 stützt sich vorzugsweise an dem Entgasungsbehälter 2 über mehrere Träger 7 ab, die über den Umfang des Entgasungsbehälters 2 vorzugsweise gleichverteilt angeordnet sind und sich vorzugsweise sternförmig zum Zentrum des Entgasungsbehälters 2 hin erstrecken (**Figuren 2** bis **8**)**.** Es sind vorzugsweise vier Trägern 7 vorgesehen (**Figur 3**), wobei diese Anzahl auch um ein bis zwei nach beiden Seiten variieren kann. In einer generalisierten und nicht dargestellten Ausführungsform des Registersystems 20 ergibt sich der Verlauf jedes Trägers 7 in Bezug zum Heizregister 20.1 vorzugsweise aus einer unteren Kontur des Heizregisters 20.1, an die sich jeder Träger 7 von unten anschmiegt.

In der vorstehend beschriebenen konkreten Ausgestaltung des Registersystems 20 in Form eines Monorohres zumindest für das Heizregister 20.1 ergibt sich der Verlauf jedes Trägers 7, wie in den **Figuren 2** bis **8** dargestellt, in Bezug zum Heizregister 20.1 aus der Positionierung der ersten Rohre 8, an die sich jeder Träger 7 von unten tangential anschmiegt. Durch die Berührungspunkte zwischen den ersten Rohren 8 und dem jeweils tangential an diesen anliegenden Träger 7 ergibt sich auf jedem Träger 7 eine gedachte Berührungslinie PL. Im Verlauf der Berührungslinie PL sind Halterungsmittel 12 für die ersten und die zweiten Rohre 8, 9 an dem Träger 7 vorgesehen, die mit dem Träger 7 fest verbunden sind. Die Halterungsmittel 12 sind vorzugsweise blechförmig ausgebildet und hochkant einerseits in Richtung einer Längsachse des Entgasungsbehälters 2 und andererseits in Richtung der Berührungslinie PL ausgerichtet. Zwei benachbarte Halterungsmittel 12 fixieren jeweils ein erstes Rohr 8 in Richtung der Berührungslinie PL unverschieblich, und jedes Halterungsmittel 12 fixiert mindestens ein zweites Rohr 9 in Richtung der Berührungslinie PL ebenfalls unverschieblich.

In der beispielhaft dargestellten Ausführungsform besteht das Registersystem 20 aus dem ersten und dem zweiten Rohr 8, 9, das jeweils als Monorohr ausgebildet und vorzugsweise spiralförmig bzw. wendelförmig gewickelt ist. Das erste Rohr liegt auf den Trägern 7 auf und ist zwischen zwei Halterungsmittels 12 lagefixiert. Es fungiert als Heizrohr und weist, gemessen von der freien Oberfläche N, den ersten Heizabstand h1 und von dem Verteilerschirm 3 den zweiten Heizabstand h2 auf (**Figuren 7, 8**), der somit in der jeweiligen Aufwachsrichtung des Schaumes r(S) den Eintritt des Schaumes S in eine Erwärmungs- bzw. Heizzone definiert. Im Bereich oberhalb des ersten Kühlabstandes k1, gemessen vom ersten Heizabstand h1, und im Bereich des zweiten Kühlabstandes k2, gemessen vom zweiten Heizabstand h2, sind, bezogen auf den Zwischenabstand zwischen zwei benachbarten ersten Rohren 8, zwei unmittelbar benachbarte zweite Rohre 9 angeordnet. Die zweiten Rohre 9 stützen sich in Ausnehmungen der Halterungsmittel 12 derart ab, dass sowohl der Abstand untereinander als auch in Bezug zu den ersten Rohren 8, auch mit Blick auf die Sicherstellung des ersten und des zweiten Kühlabstandes k1, k2, gegeben ist.

Lediglich die Träger 7 und die so schmal wie festigkeitsmäßig möglich ausgestalteten Halterungsmittel 12 liegen in der Aufwachsrichtung des Schaumes r(S), ohne diesen nennenswert thermisch zu behandeln. Sie tragen, bezogen auf die Aufwachsrichtung des Schaumes r(S), in entsprechend projizierter Richtung, eher zu einer mechanischen Beeinträchtigung des Schaumes S und damit zur gewünschten Schaumzerstörung bei.

Es hat sich als vorteilhaft herausgestellt, wenn die Erwärmungs- und/oder die Abkühlungs-Temperatur T1, T2 des Schaumes S mittelbar über die Heizmittel- und die Kühlmittel-Temperatur T_{H}, T_{K} in Abhängigkeit von einer im oder am Austritt A oder in einer aus dem Austritt A ausmündenden Rohrleitung gemessenen Sauerstoff-Konzentration c(O₂) der entgasten Flüssigkeit P' eingestellt wird. Hierzu ist vorgesehen, dass die Messeinrichtung 14 eine Messeinrichtung für Sauerstoff 14.1 ist, die die Sauerstoff-Konzentration c(O₂) ermittelt und an die Steuereinrichtung 13 übermittelt **(****Figur 3**). Weiterhin kann im Kopfraum der Entgasungsvorrichtung 10, 10.1, 10.2, oberhalb des Kühlregisters 20.2, eine Messeinrichtung 14 angeordnet sein, die eine Messeinrichtung für die Detektion von Schaum ist (z.B. Schaumsensor), wobei dieser Schaum oberhalb des Kühlregisters 20.2 aufwächst und dort ein Schaumsignal LS generiert, das an die Steuereinrichtung 13 übermittelt wird **(****Figur 3**).

Versuche mit der erfindungsgemäßen Entgasungsvorrichtung 10, 10.1, 10.2 haben gezeigt, dass sich die Sauerstoff-Konzentration in Magermilch oder teilentrahmter Milch von c(O₂) = 9 ppm auf 0,9 ppm reduzieren lässt. Die wirksame Steuerung der Schaumbildung, die im Ergebnis zu einer Zerstörung des sich bildenden und aufwachsenden Schaumes S führt, stellt sicher, dass die Entgasungsvorrichtung 10, 10.1, 10.2 über die gesamte Betriebszeit unter optimalen Entgasungsbedingungen arbeitet, was sich letztlich im vorstehend angegebenen Messergebnis niederschlägt.

Darüber hinaus zeitigen das erfindungsgemäße Verfahren und die Vorrichtung zu seiner Durchführung ein weiteres positives Ergebnis. Dies besteht darin, dass die hochwirksame Schaumzerstörung am Ort der Schaumgenerierung zu einer Rückbildung in reine Flüssigkeit führt. Die im Schaum S enthaltenen und ggf. leicht flüchtigen und damit den Kopfraum des Entgasungsbehälters 2 unter der forcierenden Einwirkung einer ggf. vorhandenen Vakuumquelle bereitwillig verlassenden Aromen bleiben in der rückgebildeten Flüssigkeit und werden auf kurzem Wege über die freie Oberfläche N in die Flüssigkeitsvorlage und über die Oberfläche des Flüssigkeitsfilms F in letzteren zurückgeführt.

### BEZUGSZEICHENLISTE DER VERWENDETEN ABKÜRZUNGEN

**Figur 1** (Stand der Technik)
   - 10: Entgasungsvorrichtung (allgemein)
   - 10.1: Entgasungsvorrichtung erster Art (mit unterem, seitlichem Eintritt)
   - 10.2: Entgasungsvorrichtung zweiter Art (mit unterem, zentralem Eintritt)

   - 2: Entgasungsbehälter
   - 2a: oberer Boden
   - 2b: unterer Boden
   - 2c: Behältermantel
   - 2d: Ablaufstutzen

   - 3: Verteilerschirm

   - 4: Zulaufrohr
   - 4a: Austrittsöffnung

   - 5: Prallplatte
   - 6: Umfangsringspalt

   - A: Austritt
   - E: Eintritt
   - F: Flüssigkeitsfilm
   - N: freie Oberfläche (freies Niveau)
   - P: zu entgasende Flüssigkeit (flüssiges Lebensmittelprodukt)
   - P': entgaste Flüssigkeit
   - S: Schaum

   - r(S): Aufwachsrichtung des Schaumes
**Figuren 2** bis **9**
   - 7: Träger
   - 8: erstes Rohr (Heizrohr)
   - 9: zweites Rohr (Kühlrohr)
   - 12: Halterungsmittel
   - 13: Steuereinrichtung

   - 14: Messeinrichtung
   - 14.1: Messeinrichtung für Sauerstoff

   - 15: erstes Ventil
   - 16: zweites Ventil

   - 20: Registersystem
   - 20.1: Heizregister
   - 20.2: Kühlregister

   - D_{H}: erster Durchmesser (erstes Rohr; Heizrohr)
   - D_{K}: zweiter Durchmesser (zweites Rohr; Kühlrohr)

   - HL: Heizleistung
   - KL: Kühlleistung

   - L_{H}: erste Länge (erstes Rohr; Heizrohr)
   - L_{K}: zweite Länge (zweites Rohr; Kühlrohr)

   - LS: Schaumsignal

   - O_{H}: Heizfläche (erstes Rohr; Heizrohr)
   - O_{K}: Kühlfläche (zweites Rohr; Kühlrohr)

   - PL: Berührungslinie
   - S_{H}: sich erwärmender und erwärmter Schaum
   - S_{K}: sich abkühlender und abgekühlter Schaum

   - T1: Erwärmungs-Temperatur (des Schaumes S)
   - T2: Abkühlungs-Temperatur (des Schaumes S)
   - T3: Flüssigkeits-Temperatur (der Flüssigkeit P, P')
   - T_{H}: Heizmittel-Temperatur
   - T_{K}: Kühlmittel-Temperatur

   - W_{H}: Heizmittel
   - W_{K}: Kühlmittel

   - c(O₂): Sauerstoff-Konzentration

   - h1: erster Heizabstand (erstes Rohr; Heizrohr)
   - h2: zweiter Abstand (erstes Rohr; Heizrohr)

   - k1: erster Kühlabstand (zweites Rohr; Kühlrohr)
   - k2: zweiter Kühlabstand (zweites Rohr; Kühlrohr)

## Patentansprüche

1. Verfahren zur Steuerung der Schaumbildung in einer Entgasungsvorrichtung (10; 10.1, 10.2) für Flüssigkeiten (P),
• wobei die Flüssigkeit (P) der Entgasungsvorrichtung (10; 10.1, 10.2) zugeführt, dort zum Zwecke der Gasabscheidung verweilt und unterhalb einer von der Flüssigkeit (P) in der Entgasungsvorrichtung (10; 10.1, 10.2) gebildeten freien Oberfläche (N) als entgaste Flüssigkeit (P') abgeführt wird,
• wobei die Flüssigkeit (P) oberhalb der freien Oberfläche (N) und an einer Oberfläche eines Verteilerschirmes (3) als Flüssigkeitsfilm (F) ausgebildet wird und von dort in die freie Oberfläche (N) eintritt,
• wobei der Flüssigkeitsfilm (F) schirmförmig ausgebildet ist,
• wobei ein sich aus der Flüssigkeit (P) mit einer Flüssigkeits-Temperatur (T3) bildender Schaum (S) oberhalb der freien Oberfläche (N) und aus dieser heraus und/oder oberhalb des Flüssigkeitsfilms (F) und aus diesem heraus jeweils freigesetzt wird und aufwächst,
• wobei der jeweilige aufwachsende Schaum (S), beginnend in einem ersten Heizabstand (h1) von der den Schaum (S) freisetzenden freien Oberfläche (N) und beginnend in einem zweiten Heizabstand (h2) von dem den Schaum (S) freisetzenden Flüssigkeitsfilm (F), zunächst eine Erwärmung von der Flüssigkeits-Temperatur (T3) auf eine Erwärmungs-Temperatur (T1) in einem aus einem Heiz- (20.1) und einem Kühlregister (20.2) bestehenden Registersystem (20) erfährt,
• wobei der jeweilige weiter aufwachsende erwärmte Schaum (S) anschließend, beginnend in einem ersten Kühlabstand (k1) vom ersten Heizabstand (h1) und beginnend in einem zweiten Kühlabstand (k2) vom zweiten Heizabstand (h2), eine Abkühlung auf eine Abkühlungs-Temperatur (T2) in dem Registersystem (20) erfährt,
• wobei Mittel zur Durchführung des Wärmeaustauschs zur Erwärmung und Abkühlung des Schaumes (S) in einer Aufwachsrichtung des Schaumes (r(S)) strömungsdurchlässig sind,
• wobei die Erwärmungs- und/oder die Abkühlungs-Temperatur (T1, T2) in Abhängigkeit von den Eigenschaften der Flüssigkeit (P; P') und/oder den physikalischen Randbedingungen eingestellt werden/wird, und
• wobei unter den Eigenschaften der Flüssigkeit (P) der Volumenstrom, die Viskosität, der Druck, die Temperatur und/oder die Zusammensetzung der Flüssigkeit (P) im Bereich der Zuführung in die Entgasungsvorrichtung (10; 10.1, 10.2) und unter den Eigenschaften der entgasten Flüssigkeit (P') die Sauerstoff-Konzentration (c(O₂)) im Bereich der Abführung aus der Entgasungsvorrichtung (10; 10.1, 10.2) und unter den physikalischen Randbedingungen der Druck und/oder das Ergebnis der Schaumzerstörung in der Entgasungsvorrichtung (10; 10.1, 10.2) verstanden werden/wird.

2. Verfahren nach Anspruch 1,
**dadurch gekennzeichnet,**
**dass** die Erwärmung des Schaumes (S) jeweils nach dem ersten Heizabstand (h1) und dem zweiten Heizabstand (h2) einsetzt, die einander gleich sind und/oder dass die Abkühlung des Schaumes (S) jeweils nach dem ersten Kühlabstand (k1) und dem zweiten Kühlabstand (k2) einsetzt, die einander gleich sind.

3. Verfahren nach Anspruch 1 oder 2,
**dadurch gekennzeichnet,**
**dass** ein Erstreckungsbereich des erwärmten Schaumes (S) und ein Erstreckungsbereich des abgekühlten Schaumes (S), in einer zugeordneten Aufwachsrichtung des Schaumes (r(S)) gesehen, unmittelbar aneinandergereiht sind, ohne sich gegenseitig vollständig oder wenigstens partiell zu überlappen.

4. Verfahren nach einem der vorhergehenden Ansprüche,
**dadurch gekennzeichnet,**
**dass** die Erwärmung und die Abkühlung des Schaumes (S) durch indirekten Wärmeaustausch erfolgt.

5. Verfahren nach einem der Ansprüche 1 bis 3,
**dadurch gekennzeichnet,**
**dass** die Erwärmung und/oder die Abkühlung des Schaumes (S) durch direkten Wärmeaustausch auf der Basis des Peltier-Effektes erfolgt.

6. Verfahren nach Anspruch 4,
**dadurch gekennzeichnet,**
**dass** als Wärmeträgermedium für den indirekten Wärmeaustausch ein Heizmittel (W_{H}) und ein Kühlmittel (W_{K}) vorgesehen ist.

7. Verfahren nach einem der Ansprüche 1 bis 6,
**dadurch gekennzeichnet,**
**dass** eine Kühlleistung (KL) im Bereich der Abkühlung des Schaumes (S) größer als eine Heizleistung (HL) im Bereich der Erwärmung des Schaumes (S) ausgelegt ist.

8. Verfahren nach einem der Ansprüche 1 bis 7,
**dadurch gekennzeichnet,**
**dass** die Erwärmungs- und/oder die Abkühlungs-Temperatur (T1, T2) mittels einer vor oder im Zuge der Inbetriebnahme der Entgasungsvorrichtung (10; 10.1, 10.2) erstellten und hinterlegten Einstellfunktion eingestellt werden/wird.

9. Entgasungsvorrichtung für Flüssigkeiten (P) mit einer Vorrichtung zur Steuerung der Schaumbildung in der Entgasungsvorrichtung (10; 10.1, 10.2), geeignet zur Durchführung des Verfahrens nach Anspruch 1, mit einem Entgasungsbehälter (2), der einen Eintritt (E) für die Flüssigkeit (P) aufweist, mit einem Austritt (A) für eine entgaste Flüssigkeit (P'), der am unteren Ende aus dem Entgasungsbehälter (2) ausmündet, mit einer von der Flüssigkeit (P) in dem Entgasungsbehälter (2) gebildeten freien Oberfläche (N), mit einem oberhalb der freien Oberfläche (N) angeordneten Verteilerschirm (3), der schirmförmig ausgebildet ist und an dessen Oberfläche die Flüssigkeit (P) als Flüssigkeitsfilm (F) ausgebildet wird, mit einem Zulaufrohr (4), das einerseits endseitig mit dem Eintritt (E) und andererseits endseitig mit einem am oberen Ende des Verteilerschirmes (3) ausmündenden Umfangsringspalt (6) in Verbindung steht, mit dem Umfangsringspalt (6), über den die Flüssigkeit (P) für den Flüssigkeitsfilm (F) ausgebracht wird,
**dadurch gekennzeichnet,**
• **dass** ein aus einem Heiz- (20.1) und einem Kühlregister (20.2) bestehendes Registersystem (20) vorgesehen ist, das mit dem Heizregister (20.1) die freie Oberfläche (N) und die flüssigkeitsfilmbildende Oberfläche des Verteilerschirms (3) im Bereich der Schaumbildung ringförmig und von der freien Oberfläche (N) mit einem ersten Heizabstand (h1) und von der flüssigkeitsfilmbildenden Oberfläche des Verteilerschirms (3) mit einem zweiten Heizabstand (h2) beabstandet umschließt,
• **dass** das Kühlregister (20.2), in einer jeweiligen Aufwachsrichtung des Schaumes (r(S)) gesehen, gegenüber dem Heizregister (20.1) im Bereich der freien Oberfläche (N) um einen ersten Kühlabstand (k1) und im Bereich des Verteilerschirmes (3) um einen zweiten Kühlabstand (k2) versetzt angeordnet ist,
• **dass** dem Registersystem (20) eine Steuereinrichtung (13) zugeordnet ist, die eine Heizleistung (HL) des Heizregisters (20.1) und/oder eine Kühlleistung (KL) des Kühlregisters (20.2) in Abhängigkeit von den Eigenschaften der Flüssigkeit (P, P') und/oder den physikalischen Randbedingungen verändert, und
• **dass** die Steuereinrichtung (13) mit einer Messeinrichtung (14, 14.1) verbunden ist, die wenigstens eine der Eigenschaften der Flüssigkeit (P, P') und/oder die physikalischen Randbedingungen ermittelt.

10. Entgasungsvorrichtung nach Anspruch 9,
**dadurch gekennzeichnet,**
**dass** die Messeinrichtung (14) eine Messeinrichtung für Sauerstoff (14.1) ist, die im oder am Austritt (A) oder in einer aus dem Austritt (A) ausmündenden Rohrleitung eine Sauerstoff-Konzentration (c(O₂)) der entgasten Flüssigkeit (P') ermittelt und an die Steuereinrichtung (13) übermittelt.

11. Entgasungsvorrichtung nach Anspruche 9 oder 10,
**dadurch gekennzeichnet,**
**dass** an einen Kopfraum des Entgasungsbehälters (2) eine Unterdruckquelle in Gestalt einer Flüssigkeitsringpumpe oder in Gestalt eines einstufigen oder mehrstufigen Ejektors angeschlossen ist.

12. Entgasungsvorrichtung nach einem der Ansprüche 9 bis 11,
**dadurch gekennzeichnet,**
**dass** das Heizregister (20.1) von einem Heizmittel (W_{H}) und das Kühlregister (20.2) von einem Kühlmittel (W_{K}) durchströmt werden.

13. Entgasungsvorrichtung nach einem der Ansprüche 9 bis 11,
**dadurch gekennzeichnet,**
**dass** das Heizregister (20.1) und/oder das Kühlregister (20.2) jeweils als Peltier-Element ausgebildet sind/ist.

14. Registersystem für die Vorrichtung zur Steuerung der Schaumbildung der Entgasungsvorrichtung (10; 10.1, 10.2) nach Anspruch 9, das aus einem Heiz- (20.1) und einem Kühlregister (20.2), nach einem der Ansprüche 9 bis 12 besteht.

15. Registersystem für die Vorrichtung zur Steuerung der Schaumbildung der Entgasungsvorrichtung (10; 10.1, 10.2) nach Anspruch 9, das aus einem Heiz- (20.1) und einem Kühlregister (20.2) nach einem der Ansprüche 9 bis 11 und 13 besteht.

16. Registersystem nach Anspruch 14 oder 15,
**dadurch gekennzeichnet,**
**dass** das Heiz- und das Kühlregister (20.1, 20.2) jeweils den Verteilerschirm (3) axialsymmetrisch umschließen.

17. Registersystem nach Anspruch 14
**dadurch gekennzeichnet,**
• **dass** das Heizregister (20.1) aus ersten Rohren (8) und das Kühlregister (20.2) aus zweiten Rohren (9) besteht,
• **dass** die ersten Rohre (8) und die zweiten Rohre (9), jeweils für sich, reihenförmig nebeneinander und voneinander beabstandet angeordnet sind,
• **dass** die ersten Rohre (8) von der freien Oberfläche (N) mit dem ersten Heizabstand (h1) und von der flüssigkeitsfilmbildenden Oberfläche des Verteilerschirms (3) mit dem zweiten Heizabstand (h2) positioniert sind,
• **dass** die zweiten Rohre (9) mit dem ersten Kühlabstand (k1), ausgehend von dem ersten Heizabstand (h1), und mit dem zweiten Kühlabstand (k2), ausgehend von dem zweiten Heizabstand (h2), positioniert sind,
• und **dass** zweite Rohre (9) über den und verteilt auf die jeweiligen Lücken zwischen den ersten Rohren (8) angeordnet sind.

18. Registersystem nach Anspruch 17,
**dadurch gekennzeichnet,**
**dass** die ersten Rohre (8) und/oder die zweiten Rohre (9) jeweils als Monorohr ausgebildet sind.

19. Registersystem nach Anspruch 18,
**dadurch gekennzeichnet,**
**dass** das erste Rohr (8) und das zweite Rohr (9), jeweils ausgebildet als Monorohr, in einem der freien Oberfläche (N) zugeordneten Bereich jeweils spiralförmig und in einem der flüssigkeitsfilmbildenden Oberfläche des Verteilerschirmes (3) zugeordneten Bereich jeweils wendeiförmig gewickelt ausgeführt sind.

20. Registersystem nach einem der Ansprüche 17 bis 19,
**dadurch gekennzeichnet,**
**dass** jeweils zwei zweite Rohre (9) über der jeweiligen Lücke zwischen zwei benachbarten ersten Rohren (8) symmetrisch und gleichverteilt positioniert sind.

## Claims

1. A method for controlling the formation of foam in a degassing device (10; 10.1, 10.2) for liquids (P),
• wherein the liquid (P) is fed to the degassing device (10; 10.1, 10.2), remains there for the purpose of gas separation and is carried away as a degassed liquid (P') below a free surface (N) formed by the liquid (P) in the degassing device (10; 10.1, 10.2),
• wherein the liquid (P) is formed as a liquid film (F) above the free surface (N) and on a surface of a distribution screen (3) and from there enters into the free surface (N),
• wherein the liquid film (F) has the shape of a screen,
• wherein a foam (S) forming out of the liquid (P) at a liquid temperature (T3) is in each case released above the free surface (N) and therefrom and/or above the liquid film (F) and therefrom, and grows,
• wherein the relevant, growing foam (S), starting at a first heating distance (h1) from the free surface (N) releasing the foam (S) and starting at a second heating distance (h2) from the liquid film (F) releasing the foam (S), firstly experiences heating of the liquid temperature (T3) to a heating temperature (T1) in a register system (20) consisting of a heating (20.1) and a cooling register (20.2),
• wherein the relevant, heated foam (S) that grows further then, starting at a first cooling distance (k1) from the first heating distance (h1) and starting at a second cooling distance (k2) from the second heating distance (h2), experiences cooling to a cooling temperature (T2) in the register system (20),
• wherein means for carrying out the heat exchange for heating and cooling the foam (S) are permeable to the flow in a direction of growth of the foam (r(S)),
• wherein the heating and/or cooling temperature (T1, T2) is/are adjusted depending on the properties of the liquid (P; P') and/or the physical constraints, and
• wherein the properties of the liquid (P) are understood to be the volumetric flow rate, viscosity, pressure, temperature and/or composition of the liquid (P) in the region in which said liquid is fed into the degassing device (10; 10.1, 10.2) and the properties of the degassed liquid (P') are understood to be the oxygen concentration (c(O₂)) in the region in which said degassed liquid is carried away out of the degassing device (10; 10.1, 10.2) and the physical constraints are understood to be the pressure and/or the result of the defoaming in the degassing device (10; 10.1, 10.2).

2. The method according to claim 1,
**characterized**
**in that** the heating of the foam (S) in each case sets in after the first heating distance (h1) and second heating distance (h2), which are identical to one another, and/or in that the cooling of the foam (S) in each case sets in after the first cooling distance (k1) and second cooling distance (k2), which are identical to one another.

3. The method according to claim 1 or 2,
**characterized**
**in that** an extension region of the heated foam (S) and an extension region of the cooled foam (S), viewed in an associated direction of growth of the foam (r(S)), immediately adjoin one another without overlapping one another fully or at least in part.

4. The method according to any one of the preceding claims,
**characterized**
**in that** the heating and cooling of the foam (S) takes place by means of indirect heat exchange.

5. The method according to any one of claims 1 to 3,
**characterized**
**in that** the heating and/or cooling of the foam (S) takes place by means of direct heat exchange on the basis of the Peltier effect.

6. The method according to claim 4,
**characterized**
**in that** a heating means (W_{H}) and a cooling means (W_{K}) is provided as the heat transfer medium for the indirect heat exchange.

7. The method according to any one of claims 1 to 6,
**characterized**
**in that** a cooling capacity (KL) in the region in which the foam (S) is cooled is designed to be greater than a heating capacity (HL) in the region in which the foam (S) is heated.

8. The method according to any one of claims 1 to 7,
**characterized**
**in that** the heating and/or cooling temperature (T1, T2) is/are adjusted by means of an adjustment function created and stored prior to or during commissioning of the degassing device (10; 10.1, 10.2).

9. A degassing device for liquids (P), comprising a device for controlling the formation of foam in the degassing device (10; 10.1, 10.2), suitable for carrying out the method according to claim 1, comprising a degassing container (2) that has an inlet (E) for the liquid (P), comprising an outlet (A) for a degassed liquid (P') that opens out at the lower end of the degassing container (2), comprising a free surface (N) formed by the liquid (P) in the degassing container (2), comprising a distribution screen (3) which is arranged above the free surface (N), has the shape of a screen and on the surface of which the liquid (P) is formed as a liquid film (F), comprising a feed pipe (4) that is connected to the inlet (E) at one end and to a circumferential annular gap (6) at the other end, which circumferential annular gap opens out at the upper end of the distribution screen (3), comprising the circumferential annular gap (6), via which the liquid (P) for the liquid film (F) is discharged,
**characterized**
• **in that** a register system (20) consisting of a heating (20.1) and a cooling register (20.2) is provided, the heating register (20.1) of which register system surrounds the free surface (N) and the liquid film-forming surface of the distribution screen (3) in an annular manner in the region in which the foam forms and at a first heating distance (h1) from the free surface (N) and at a second heating distance (h2) from the liquid film-forming surface of the distribution screen (3),
• **in that** the cooling register (20.2), viewed in a relevant direction of growth of the foam (r(S)), is arranged so as to be offset with respect to the heating register (20.1) in the region of the free surface (N) by a first cooling distance (k1) and in the region of the distribution screen (3) by a second cooling distance (k2),
• **in that** the register system (20) is assigned a control apparatus (13) that alters a heating capacity (HL) of the heating register (20.1) and/or a cooling capacity (KL) of the cooling register (20.2) depending on the properties of the liquid (P, P') and/or the physical constraints, and
• **in that** the control apparatus (13) is connected to a measuring apparatus (14, 14.1) that determines at least one of the properties of the liquid (P, P') and/or the physical constraints.

10. The degassing device according to claim 9,
**characterized**
**in that** the measuring apparatus (14) is a measuring apparatus for oxygen (14.1) that determines an oxygen concentration (c(O₂)) of the degassed liquid (P') in or at the outlet (A) or in a pipeline that opens out at the outlet (A), and transmits said oxygen concentration to the control apparatus (13).

11. The degassing device according to claim 9 or 10,
**characterized**
**in that** a vacuum source in the form of a liquid-ring pump or in the form of a single-stage or multi-stage ejector is connected to a headspace of the degassing container (2).

12. The degassing device according to any one of claims 9 to 11,
**characterized**
**in that** a heating means (W_{H}) flows through the heating register (20.1) and a cooling means (W_{K}) flows through the cooling register (20.2).

13. The degassing device according to any one of claims 9 to 11,
**characterized**
**in that** the heating register (20.1) and/or the cooling register (20.2) is/are each designed as a Peltier element.

14. A register system for the device for controlling the formation of foam in the degassing device (10; 10.1, 10.2) according to claim 9, which consists of a heating (20.1) and a cooling register (20.2) according to any one of claims 9 to 12.

15. The register system for the device for controlling the formation of foam in the degassing device (10; 10.1, 10.2) according to claim 9, which consists of a heating (20.1) and a cooling register (20.2) according to any one of claims 9 to 11 and 13.

16. The register system according to claim 14 or 15,
**characterized**
**in that** the heating and cooling register (20.1, 20.2) each surround the distribution screen (3) in an axially symmetrical manner.

17. The register system according to claim 14,
**characterized**
• **in that** the heating register (20.1) consists of first pipes (8) and the cooling register (20.2) consists of second pipes (9),
• **in that** the first pipes (8) and the second pipes (9), both taken separately, are arranged in rows one next to the other and at a distance from one another,
• **in that** the first pipes (8) are positioned at the first heating distance (h1) from the free surface (N) and at the second heating distance (h2) from the liquid film-forming surface of the distribution screen (3),
• **in that** the second pipes (9) are positioned at the first cooling distance (k1), proceeding from the first heating distance (h1), and at the second cooling distance (k2), proceeding from the second heating distance (h2),
• and **in that** second pipes (9) are arranged over the first pipes (8) and so as to be allocated to the respective gaps between said first pipes.

18. The register system according to claim 17,
**characterized**
**in that** the first pipes (8) and/or the second pipes (9) are each designed as a mono-pipe.

19. The register system according to claim 18,
**characterized**
**in that** the first pipe (8) and the second pipe (9), each designed as a mono-pipe, are each wound in the manner of a spiral in a region assigned to the free surface (N) and each wound in the manner of a helix in a region assigned to the liquid film-forming surface of the distribution screen (3).

20. The register system according to any one of claims 17 to 19,
**characterized**
**in that**, in each case, two second pipes (9) are positioned over the relevant gap between two adjacent first pipes (8) in a symmetrical and uniformly distributed manner.

## Revendications

1. Procédé de commande pour la formation de mousse dans un dispositif de dégazage (10 ; 10.1, 10.2) pour liquides (P),
• dans lequel le liquide (P) est alimenté vers le dispositif de dégazage (10 ; 10.1, 10.2), où il séjourne aux fins de la séparation de gaz, et évacué en tant que liquide dégazé (P') sous une surface supérieure libre (N) formée par le liquide (P) dans le dispositif de dégazage (10 ; 10.1, 10.2),
• dans lequel le liquide (P) se présente comme un film liquide (F) au-dessus de la surface supérieure libre (N) et sur une surface supérieure d'une ombrelle de distribution (3), et pénètre à partir de là dans la surface supérieure libre (N),
• dans lequel le film liquide (F) présente une forme d'ombrelle,
• dans lequel une mousse (S) formée à partir du liquide (P) à une température de liquide (T3) est libérée et se développe au-dessus de la surface supérieure libre (N) et hors de celle-ci et/ou au-dessus du film liquide (F) et hors de celui-ci,
• dans lequel la mousse (S) se développant respectivement connaît tout d'abord un chauffage de la température de liquide (T3) à une température de chauffage (T1) dans un système de registres (20) comprenant un registre de chauffage (20.1) et un registre de refroidissement (20.2), à partir d'une première distance de chauffage (h1) par rapport à la surface supérieure libre (N) libérant la mousse (S) et à partir d'une deuxième distance de chauffage (h2) par rapport au film liquide (F) libérant la mousse (S),
• dans lequel la mousse chauffée (S) respective se développant encore davantage connaît ensuite un refroidissement à une température de refroidissement (T2) dans le système de registres (20), à partir d'une première distance de refroidissement (k1) par rapport à la première distance de chauffage (h1) et à partir d'une deuxième distance de refroidissement (k2) par rapport à la deuxième distance de chauffage (h2),
• dans lequel des moyens d'exécution de l'échange de chaleur aux fins du chauffage et du refroidissement de la mousse (S) dans une direction de développement de la mousse (r(S)) sont perméables à l'écoulement,
• dans lequel la température de chauffage et/ou de refroidissement (T1, T2) est/sont réglée(s) en fonction des propriétés du liquide (P ; P') et/ou des conditions marginales physiques, et
• dans lequel, par propriétés du liquide (P), on entend le flux volumique, la viscosité, la pression, la température et/ou la composition du liquide (P) dans la région d'alimentation dans le dispositif de dégazage (10 ; 10.1, 10.2) et, par propriétés du liquide dégazé (P'), on entend la concentration en oxygène (c(O₂)) dans la région d'évacuation du dispositif de dégazage (10 ; 10.1, 10.2), et par conditions marginales physiques, on entend la pression et/ou le résultat de la décomposition de mousse dans le dispositif de dégazage (10 ; 10.1, 10.2).

2. Procédé selon la revendication 1,
**caractérisé en ce que**
- le chauffage de la mousse (S) a lieu respectivement selon la première distance de chauffage (h1) et la deuxième distance de chauffage (h2), lesquelles sont identiques entre elles, et/ou **en ce que** le refroidissement de la mousse (S) a lieu respectivement selon la première distance de refroidissement (k1) ou la deuxième distance de refroidissement (k2), lesquelles sont identiques entre elles.

3. Procédé selon la revendication 1 ou 2,
**caractérisé en ce que**
- une région d'extension de la mousse chauffée (S) et une région d'extension de la mousse refroidie (S) sont juxtaposées directement, sans se chevaucher complètement, ni même partiellement entre elles, vues dans une direction de développement correspondante de la mousse (r(S)).

4. Procédé selon l'une des revendications précédentes,
**caractérisé en ce que**
- le chauffage et le refroidissement de la mousse (S) se font par échange de chaleur indirect.

5. Procédé selon l'une des revendications 1 à 3,
**caractérisé en ce que**
- le chauffage et/ou le refroidissement de la mousse (S) se font par échange de chaleur direct sur la base de l'effet Peltier.

6. Procédé selon la revendication 4,
**caractérisé en ce que**
- un fluide de chauffage (W_{H}) et un fluide de refroidissement (W_{K}) sont prévus en tant que fluide caloporteur servant à l'échange de chaleur indirect.

7. Procédé selon l'une des revendications 1 à 6,
**caractérisé en ce que**
- une puissance de refroidissement (KL) dans la région du refroidissement de la mousse (S) est supérieure à une puissance de chauffage (HL) dans la région du chauffage de la mousse (S).

8. Procédé selon l'une des revendications 1 à 7,
**caractérisé en ce que**
- la température de chauffage et/ou de refroidissement (T1, T2) est/sont réglée(s) au moyen d'une fonction de réglage établie et enregistrée avant ou pendant la mise en marche du dispositif de dégazage (10 ; 10.1, 10.2).

9. Dispositif de dégazage pour liquides (P), avec un dispositif de commande pour la formation de mousse dans le dispositif de dégazage (10 ; 10.1, 10.2), adapté pour l'exécution du procédé selon la revendication 1, avec un récipient de dégazage (2) présentant une entrée (E) pour le liquide (P), avec une sortie (A) pour un liquide dégazé (P'), laquelle débouche du récipient de dégazage (2) à l'extrémité inférieure, avec une surface supérieure libre (N) formée par le liquide (P) dans le récipient de dégazage (2), avec une ombrelle de distribution (3) disposée au-dessus de la surface supérieure libre (N), laquelle présente une forme d'ombrelle et sur la surface supérieure de laquelle le liquide (P) forme un film liquide (F), avec un tuyau d'amenée (4) relié d'une part côté extrémité à l'entrée (E) et d'autre part côté extrémité à une fente annulaire circonférentielle (6) débouchant sur l'extrémité supérieure de l'ombrelle de distribution (3), avec la fente annulaire circonférentielle (6), par laquelle le liquide (P) est extrait pour le film liquide (F), **caractérisé en ce que**
• il est prévu un système de registres (20) comprenant un registre de chauffage (20.1) et un registre de refroidissement (20.2), lequel entoure, avec le registre de chauffage (20.1), la surface supérieure libre (N) et la surface de l'ombrelle de distribution (3) formant le film liquide, de façon circulaire, dans la région de la formation de mousse, en respectant un espacement par rapport à la surface supérieure libre (N) selon une première distance de chauffage (h1) et par rapport à la surface de l'ombrelle de distribution (3) formant le film liquide selon une deuxième distance de chauffage (h2),
• le registre de refroidissement (20.2), vu dans une direction de développement respective de la mousse (r(S)), est disposé de façon décalée par rapport au registre de chauffage (20.1) selon une première distance de refroidissement (k1) dans la région de la surface supérieure libre (N) et selon une deuxième distance de refroidissement (k2) dans la région de l'ombrelle de distribution (3),
• un dispositif de commande (13) modifiant une puissance de chauffage (HL) du registre de chauffage (20.1) et/ou une puissance de refroidissement (KL) du registre de refroidissement (20.2) en fonction des propriétés du liquide (P, P') et/ou des conditions marginales physiques est attribué au système de registres (20) ;
• le dispositif de commande (13) est relié à un dispositif de mesure (14, 14.1) déterminant l'une au moins des propriétés du liquide (P, P') et/ou des conditions marginales physiques.

10. Dispositif de dégazage selon la revendication 9,
**caractérisé en ce que**
- le dispositif de mesure (14) est un dispositif de mesure de l'oxygène (14.1), destiné à déterminer une concentration en oxygène (c(O₂)) du liquide dégazé (P') dans ou à la sortie (A) ou dans une conduite débouchant de la sortie (A), et à transmettre celle-ci au dispositif de commande (13).

11. Dispositif de dégazage selon la revendication 9 ou 10,
**caractérisé en ce que**
- une source de vide sous la forme d'une pompe à anneau liquide ou sous la forme d'un éjecteur à un ou plusieurs niveaux est raccordée à un espace de tête du récipient de dégazage (2).

12. Dispositif de dégazage selon l'une des revendications 9 à 11,
**caractérisé en ce que**
- le registre de chauffage (20.1) est traversé par un flux de fluide de chauffage (W_{H}) et le registre de refroidissement (20.2) est traversé par un flux de fluide de refroidissement (W_{K}).

13. Dispositif de dégazage selon l'une des revendications 9 à 11,
**caractérisé en ce que**
- le registre de chauffage (20.1) et/ou le registre de refroidissement (20.2) est/sont formé(s) respectivement sur un élément de Peltier.

14. Système de registres pour le dispositif de commande pour la formation de mousse du dispositif de dégazage (10 ; 10.1, 10.2) selon la revendication 9, comprenant un registre de chauffage (20.1) et un registre de refroidissement (20.2) selon l'une des revendications 9 à 12.

15. Système de registres pour le dispositif de commande pour la formation de mousse du dispositif de dégazage (10 ; 10.1, 10.2) selon la revendication 9, comprenant un registre de chauffage (20.1) et un registre de refroidissement (20.2) selon l'une des revendications 9 à 11 et 13.

16. Système de registres selon la revendication 14 ou 15,
**caractérisé en ce que**
- le registre de chauffage et de refroidissement (20.1, 20.2) entoure respectivement l'ombrelle de distribution (3) de façon axialement symétrique.

17. Système de registres selon la revendication 14,
**caractérisé en ce que**
• le registre de chauffage (20.1) comprend des premiers tuyaux (8) et le registre de refroidissement (20.2) comprend des deuxièmes tuyaux (9),
• les premiers tuyaux (8) et les deuxièmes tuyaux (9), respectivement, sont disposés les uns à côté des autres en rangée et à distance les uns des autres,
• les premiers tuyaux (8) sont positionnés selon la première distance de chauffage (h1) par rapport à la surface supérieure libre (N) et selon la deuxième distance de chauffage (h2) par rapport à la surface de l'ombrelle de distribution (3) formant le film liquide,
• les deuxièmes tuyaux (9) sont positionnés selon la première distance de refroidissement (k1) à partir de la première distance de chauffage (h1) et selon la deuxième distance de refroidissement (k2) à partir de la deuxième distance de chauffage (h2),
• et des deuxièmes tuyaux (9) sont disposés par-dessus les premiers tuyaux (8) tout en étant répartis entre les interstices respectifs entre les premiers tuyaux (8).

18. Système de registres selon la revendication 17,
**caractérisé en ce que**
- les premiers tuyaux (8) et/ou les deuxièmes tuyaux (9) sont conçus respectivement comme un monotube.

19. Système de registres selon la revendication 18,
**caractérisé en ce que**
- le premier tuyau (8) et le deuxième tuyau (9), respectivement conçus comme un monotube, sont réalisés respectivement en forme de spirale dans une région attribuée à la surface supérieure libre (N) et respectivement enroulés en hélice dans une région attribuée à la surface de l'ombrelle de distribution (3) formant le film liquide.

20. Système de registres selon l'une des revendications 17 à 19,
**caractérisé en ce que**
- deux deuxièmes tuyaux (9) sont respectivement positionnés symétriquement et répartis de façon homogène au-dessus de l'interstice respectif entre deux premiers tuyaux (8) voisins.
